# EUROPÄISCHE PATENTSCHRIFT

(11) **EP 1 849 293 B1**
(45) Veröffentlichungstag und Bekanntmachung des Hinweises auf die Patenterteilung: **28.03.2012**
(21) Anmeldenummer: 06707057.3
(22) Anmeldetag: 17.02.2006
(51) Int. Cl.: H04M 11/04, G08B 25/10

(54) **VERFAHREN UND SYSTEM ZUR INFORMATIONSÜBERMITTLUNG FÜR DIE BILDUNG EINES GLOBALEN NOTRUF -/WARNSYSTEMS INSBESONDERE UNTER VERWENDUNG EINES SATELLITENNAVIGATIONSSYSTEMS WIE Z.B. GALILEO**
DATA TRANSMISSION METHOD AND SYSTEM FOR FORMING A GLOBAL EMERGENCY CALL/WARNING SYSTEM ESPECIALLY USING A SATELLITE NAVIGATION SYSTEM SUCH AS GALILEO
PROCEDE ET SYSTEME POUR TRANSMETTRE UNE INFORMATION ET CREER UN SYSTEME GLOBAL D'APPEL D'URGENCE /D'ALERTE, NOTAMMENT AU MOYEN D'UN SYSTEME DE NAVIGATION PAR SATELLITE COMME, PAR EX., GALILEO

(30) Priorität: 18.02.2005 DE 102005007465; 18.02.2005 DE 102005007466; 18.02.2005 DE 102005007548; 18.02.2005 DE 102005007549; 18.02.2005 DE 102005007550
(43) Veröffentlichungstag der Anmeldung: 31.10.2007
(73) Patentinhaber: Deutsches Zentrum für Luft- und Raumfahrt e.V., 51170 Köln (DE)
(72) Erfinder: STEINGASS, Alexander, 82205 Gilching (DE); BISCHL, Hermann, 94501 Aldersbach (DE); SCALISE, Sandro, 81245 München (DE)
(74) Vertreter: Thun, Clemens
(86) Internationale Anmeldenummer: PCT/EP2006/001471
(87) Internationale Veröffentlichungsnummer: WO 2006/087217

(56) Entgegenhaltungen:
- EP-A- 1 244 228
- WO-A-00/30379
- WO-A-96/05678
- WO-A-96/10834
- GB-A- 2 404 115
- US-A- 5 095 532
- US-A- 6 084 510
- US-A1- 2003 137 426
- US-A1- 2003 137 426
- US-A1- 2004 142 660
- US-A1- 2005 032 504
- US-A1- 2005 032 504
- US-B1- 6 522 250
- US-B1- 6 839 614
- US-B1- 6 839 614

## Beschreibung

Die vorliegende Erfindung betrifft ein Kommunikationssystem, welches vorzugsweise zur Nutzung in einem globalen Notruf-/Warnsystem vorgesehen ist und hierzu mindestens ein Kommunikationsgerät sowie eine mit dem Kommunikationsgerät zum Austausch von Textinformationen in Verbindung stehende zentrale Einrichtung aufweist, wobei die Verbindung zwischen dem Kommunikationsgerät und der zentralen Einrichtung über einen Satelliten - vorzugsweise den Satelliten eines Navigationssystems - erfolgt. Darüber hinaus betrifft die vorliegende Erfindung ein Verfahren zur satellitengestützten Informationsübermittlung für die Bildung eines globalen Notruf-/Warnsystems.

Die Übermittlung von Textinformationen im Rahmen des Short Message Service (SMS) hat als Bestandteil der allgemeinen Kommunikation in den letzten Jahren zunehmend an Bedeutung gewonnen. Was vor einigen Jahren lediglich als einfache Zusatzoption für Mobilfunktelefone gedacht war, hat sich zwischenzeitlich zu einer bedeutenden Einnahmequelle für die Betreiber von Mobilfunknetzen entwickelt. Der Grund hierfür liegt darin, dass mit Hilfe von SMS-Nachrichten unterschiedlichste Informationen in einfacher Weise übermittelt werden können.

Die vielseitigen Einsatzmöglichkeiten von SMS-Nachrichten haben auch zu Überlegungen geführt, diese Art der Informationsübermittlung in den Bereichen des Notrufs bzw. der Warnung verschiedener Personen vor Gefahren zu nutzen. Da Mobilfunktelefone weit verbreitet sind, wäre es durchaus überlegenswert, im Falle eines Unfalls oder dergleichen mit Hilfe einer SMS-Nachricht Hilfe anzufordern. Auf der anderen Seite könnten SMS-Nachrichten auch dazu genutzt werden, eine Vielzahl von Personen vor bevorstehenden Gefahren zu warnen. Hierbei hat sich gezeigt, dass bislang bestehende Systeme zum Warnen vor bevorstehenden Naturkatastrophen oder anderen Gefahren nach wie vor unzulänglich sind, da sie eine zuverlässige und rechtzeitige Übermittlung von Warninformationen an einen Großteil der betroffenen Bevölkerung nicht mit ausreichender Sicherheit gewährleisten.

Die Anforderungen an ein Notruf-/Warnsystem sind somit extrem hoch, da nur im Falle einer absolut zuverlässigen Datenübermittlung die angestrebten Ziele, nämlich eine schnelle und zuverlässige Anforderung von Hilfe bzw. eine umfassende Warnung betroffener Personen oder Gebiete erreicht werden können. Bislang existierende Kommunikationssysteme bieten eine derart hohe Betriebssicherheit in der Regel nicht, da eine generelle Kommunikationsverbindung zwischen einem einzelnen Gerät und einer zentralen Einrichtung des Notruf-/Warnsystems nicht grundsätzlich gewährleistet ist. Es ist also nicht sichergestellt, dass zu jedem Zeitpunkt und an jedem Ort das Absetzen eines Notrufs möglich ist. Andere Systeme wiederum bieten zwar eine jederzeit zur Verfügung stehende Kommunikationsverbindung zur Übermittlung von Daten, sie erfordern allerdings den Einsatz von sehr speziellen und dementsprechend teuren Endgeräten. Auch diese Systeme können demzufolge nicht zur Bildung eines globalen und damit für möglichst viele Personen nutzbaren Notruf-/Warnsystems genutzt werden.

Dokument US2003/0137426 A1 zeigt ein System zur Kommunikation zwischen einem Satellit und einem Kommunikationsgerät; das Kommunikationsgerät übermittelt Informationen zu vorgegebenen Zeitpunkten.

Der vorliegenden Erfindung liegt dementsprechend zunächst die Aufgabe zugrunde, eine Möglichkeit anzugeben, Textinformationen in einfacher und zuverlässiger Weise zwischen einem Kommunikationsgerät und einer mit dem Kommunikationsgerät in Verbindung stehenden zentralen Einrichtung zu übermitteln, um hierdurch die Voraussetzungen für die Bildung eines globalen Notruf-/Warnsystems zu schaffen.

Die Aufgabe wird durch die in den unabhängigen Ansprüchen angegebene Erfindung gelöst. Vorteilhafte Weiterbildungen der Erfindung sind Gegenstand der Unteransprüche.

Gemäß einem ersten Aspekt wird dementsprechend ein Kommunikationssystem zur vorzugsweisen Nutzung in einem globalen Notruf-/Warnsystem vorgeschlagen, welches mindestens ein Kommunikationsgerät sowie eine mit dem Kommunikationsgerät zum Austausch von Textinformationen in Verbindung stehende zentrale Einrichtung aufweist, wobei die Verbindung zwischen dem Kommunikationsgerät und der zentralen Einrichtung über mindestens einen Satelliten erfolgt und von dem Kommunikationsgerät übermittelte Daten zusätzliche Angaben über die aktuelle Position des Kommunikationsgeräts oder von der zentralen Einrichtung übermittelte Daten zusätzliche Angaben über die örtliche Relevanz der Textinformationen enthalten.

Kerngedanke der vorliegenden Erfindung ist somit, den Informationsaustausch zwischen den verschiedenen Komponenten des Kommunikationssystems über eine Satellitenverbindung vorzunehmen und den übermittelten Daten - im Falle der Übermittlung von den Kommunikationsgeräten an die zentrale Einrichtung - zusätzliche Angaben über die aktuelle Position des Kommunikationsgeräts oder - im Falle der Übermittlung von Informationen von der zentralen Einrichtung an die Kommunikationsgeräte - zusätzliche Angaben über die örtliche Relevanz der Informationen hinzuzufügen. Die Nutzung einer Satellitenverbindung bringt dabei den Vorteil mit sich, dass nahezu an jedem beliebigen Ort auf der Erde der Aufbau einer Kommunikationsverbindung ermöglicht ist. Es ist also sichergestellt, dass - bspw. im Falle eines Unfalls - jederzeit Hilfe angefordert werden kann. Auf der anderen Seite kann mit Hilfe eines Satelliten selbstverständlich eine Vielzahl von Kommunikationsgeräten gleichzeitig angesprochen werden, so dass im Falle einer Warnmeldung die Möglichkeit besteht, einen Großteil der betroffenen Personen zu kontaktieren. Allerdings ist die reine Übermittlung einer Warninformation selbstverständlich nicht sinnvoll, da für den Empfänger der Information auch die Möglichkeit bestehen muss, festzustellen, ob er von der möglicherweise bevorstehenden Gefahr betroffen ist oder nicht. Ferner ist die einfache Anforderung von Hilfe für einen Verunglückten allein nicht zielführend, wenn nicht Gewissheit darüber besteht, an welchem Ort sich die Hilfe benötigende Person aufhält. Die zusätzliche Übermittlung von Angaben über die aktuelle Position des Kommunikationsgeräts bzw. von Angaben über die örtliche Relevanz der Informationen stellen nunmehr in Ergänzung zu der bereitgestellten Satellitenverbindung sicher, dass auch tatsächlich die benötigte Hilfe in geeigneter Weise angefordert werden kann bzw. diejenigen Personen vor einer bevorstehenden Gefahr gewarnt werden, die auch tatsächlich davon betroffen sind. Das erfindungsgemäße Kommunikationssystem erfüllt somit genau diejenigen Anforderungen, die an ein global nutzbares Notruf-/Warnsystem gestellt werden. Vorzugsweise übermittelt das Kommunikationsgerät neben den Ortsangaben auch noch Informationen hinsichtlich seiner aktuellen Bewegung (Kurs und Geschwindigkeit), so dass das Auffinden der hilfesuchenden Person zu einem späteren Zeitpunkt erleichtert wird.

Weiterbildungen der vorliegenden Erfindung betreffen unter anderem spezielle technische Maßnahmen, durch welche der Datenaustausch zwischen den verschiedenen Teilnehmern des erfindungsgemäßen Kommunikationssystems optimiert wird.

Wie bereits eingangs erwähnt wurde, sollten die von einem Verbraucher genutzten Endgeräte zur Kommunikation derart gestaltet sein, dass sie kostengünstig herstellbar und dementsprechend für eine Vielzahl von Personen nutzbar sind. Insbesondere soll die Notwendigkeit der Nutzung von speziell ausgestalteten Endgeräten mit einer hohen Sendeleistung vermieden werden. Stattdessen ist die Nutzung von Geräten wünschenswert, die weitestgehend auf Geräten basieren, welche bereits heute in der allgemeinen Mobilfunktechnologie genutzt werden. Die Sendeleistungen derartiger Geräte liegt üblicherweise im Bereich von wenigen Watt.

Um allerdings bei derart vergleichsweise niedrigen Sendeleistungen noch eine sichere Datenkommunikation zu ermöglichen, müssen besondere Maßnahmen getroffen werden, die eine Übermittlung der Informationen von dem Kommunikationsgerät an einen Satelliten gewährleisten. Eine erste vorteilhafte Weiterbildung der vorliegenden Erfindung befasst sich dementsprechend mit Maßnahmen, welche eine sichere und zuverlässige Übermittlung der Informationen von einem Kommunikationsgerät an den Satelliten gewährleisten. Hierbei ist auch zu berücksichtigen, dass bei einer globalen Zurverfügungstellung eines derartigen Systems im Regelfall mehrere Endgeräte gleichzeitig Notrufe absetzen möchten, was bei den angestrebten niedrigen Sendeleistungen zu weiteren Komplikationen führt. Entsprechend der vorteilhaften Weiterbildung der vorliegenden Erfindung ist dementsprechend ein spezielles Verfahren zur Übermittlung der Textinformationen vorgesehen, wobei im Rahmen einer Initialisierungsprozedur dem Kommunikationsgerät zunächst Daten hinsichtlich eines vorgegebenen Empfangszeitpunkts für die zu übermittelnden Informationen und/oder einer vorgegebenen Empfangsfrequenz übermittelt werden und wobei dann das Kommunikationsgerät auf Basis von ergänzenden Informationen hinsichtlich der Positionen und/oder Bewegungen des Kommunikationsgeräts und des Satelliten einen geeigneten Zeitpunkt für die Übermittlung der Informationen und/oder eine geeignete Sendefrequenz ermittelt.

Es ist also vorgesehen, dass die Daten derart von dem Kommunikationsgerät an den Satelliten übermittelt werden, dass sie dort in einem zuvor festgelegten Zeitraum und damit kollisionsfrei sowie mit einer speziell vorgegebenen Empfangsfrequenz eintreffen. Hierdurch wird die Kapazität des Systems hinsichtlich der Anzahl der erfolgreich übermittelbaren Textinformationen deutlich erhöht, da die Anzahl an Signalkollisionen reduziert wird. Durch die Vermeidung der Kollisionen wird ferner auch erreicht, dass auch Signale mit verhältnismäßig geringen Sendeleistungen noch sicher und fehlerfrei - da ungestört - am Satelliten empfangen werden können. Im Rahmen der Initialisierungsprozedur ist vorzugsweise vorgesehen, dass das Kommunikationsgerät eine erste Anfrage an den Satelliten übermittelt und in Antwort auf diese Anfrage dem Kommunikationsgerät Informationen hinsichtlich eines ihm zugewiesenen Empfangszeitpunkts und/oder einer vorgegebenen Empfangsfrequenz übermittelt werden.

Dieser Gedanke eines speziellen Verfahrens zum Aufbau einer Datenverbindung, bei dem im Rahmen einer Initialisierungsprozedur dem Kommunikationsgerät zunächst Informationen hinsichtlich eines geeigneten Empfangszeitpunkts für die zu übermittelnden Informationen und/oder einer geeigneten Empfangsfrequenz übermittelt werden, wobei dann das Kommunikationsgerät auf Basis von ergänzenden Informationen, welche die Positionen und/oder Bewegungen des Kommunikationsgeräts und/oder des Satelliten betreffen, einen geeigneten Zeitpunkt für die Übermittlung der Informationen und/oder eine geeignete Sendefrequenz ermittelt, kann im übrigen auch unabhängig von der Art der übermittelten Information zum Einsatz kommen. Generell bringt dieses Verfahren bei satellitengestützten Kommunikationssystemen Vorteile mit sich.

Gemäß einem zweiten Aspekt wird dementsprechend ein Kommunikationssystem mit einem Kommunikationsgerät sowie einer durch einen Satelliten gebildeten Einrichtung zum Empfangen von von dem Kommunikationsgerät zu übermittelnden Informationen vorgeschlagen, wobei im Rahmen einer Initialisierungsprozedur dem Kommunikationsgerät Daten hinsichtlich eines vorgegebenen Empfangszeitpunkts für die Informationen an dem Satelliten und/oder einer vorgegebenen Empfangsfrequenz übermittelt werden und wobei das Kommunikationsgerät anschließend auf Basis von ergänzenden Informationen hinsichtlich der Positionen und/oder Bewegungen des Kommunikationsgeräts und des Satelliten einen geeigneten Zeitpunkt für die Übermittlung der Informationen und/oder eine geeignete Sendefrequenz ermittelt.

Diese Anpassung der Sendefrequenz des Kommunikationsgeräts ist bereits insofern erforderlich, als aufgrund der Relativbewegung zwischen dem Kommunikationsgerät und dem Satelliten eine Dopplerverschiebung des Signals auftreten kann, welche durch eine geeignete Anpassung der Sendefrequenz wiederum ausgeglichen wird. Auf der anderen Seite kann allerdings zur Erhöhung des Datenverkehrs auch vorgesehen sein, dass der Satellit mehrere Frequenzbänder zur Verfügung stellt, auf denen er gleichzeitig Daten empfangen kann. In diesem Fall sollten die unterschiedlichen Frequenzbänder oder Subcarrier möglichst gleichmäßig ausgelastet sein, um eine parallele Übermittlung von Notrufinformationen sicherzustellen. Auch in diesem Fall muss die Sendefrequenz des Kommunikationsgeräts dann entsprechend dem ihm zugewiesenen Subcarrier in geeigneter Weise angepasst werden. Die Anpassung des Sendezeitpunkts wiederum berücksichtigt die Laufzeit des Signals und stellt sicher, dass die Informationen auch tatsächlich im vorgegebenen Zeitraum und damit überschneidungsfrei mit anderen Signalen am Satelliten eintreffen.

Bei diesem besonderen Verfahren zum Aufbau der Datenverbindung findet nicht nur eine Übermittlung von Informationen von dem Kommunikationsgerät zu dem Satelliten, sondern auch in entgegengesetzter Richtung statt. Zum einen müssen nämlich die erforderlichen Informationen hinsichtlich der Empfangsfrequenz und des Empfangszeitraums von dem Satelliten an das Kommunikationsgerät übermittelt werden, zum anderen ist eine Bestätigung des Empfangs der Notrufinformation durch eine zentrale Leitstelle des Notrufsystems wünschenswert.

Bei der Übermittlung von Informationen von dem Satelliten an den Empfänger ist selbstverständlich eine Anpassung der Sendefrequenz sowie des Sendezeitpunkts durch den Satelliten, wie dies bei der Übermittlung von Informationen von dem Kommunikationsgerät zu dem Satelliten hin vorgesehen ist, nicht möglich. Zwar weist das von dem Satelliten an das Kommunikationsgerät übermittelte Signal eine höhere Leistung auf, trotz allem sollten zusätzliche Maßnahmen vorgesehen sein, die einen optimalen und sicheren Empfang der Satellitensignale ermöglichen.

Entsprechend einer anderen vorteilhaften Weiterbildung dieses Verfahrens ist dementsprechend vorgesehen, dass das Kommunikationsgerät getrennt von den eigentlich zu empfangenden Daten ergänzende Informationen erhält, auf deren Basis das Gerät sein Verhalten zum Empfangen der Satellitensignale abstimmt. Im Sinne dieser vorteilhaften Weiterbildung der Erfindung wird somit mit Hilfe eines Hilfssystems das Empfangsverhalten des Kommunikationsgerät optimiert, um einen zuverlässigen Datenempfang sicherzustellen. Bei diesen ergänzenden Informationen kann es sich insbesondere wiederum um die Navigationsinformationen im Hinblick auf die Positionen und/oder Bewegungen des Kommunikationsgeräts und/oder des Satelliten handeln. Mit Hilfe dieser ergänzenden Informationen kann dann beispielsweise das Kommunikationsgerät die Frequenz des eintreffenden Satellitensignals besser abschätzen und sein Empfangsverhalten darauf abstimmen. Auch eine verbesserte Schätzung der Phase des Satellitensignals, welche für einen zuverlässigen Empfang unerlässlich ist, wird hierdurch gewährleistet.

Dieser Gedanke, gemäß dem ein Kommunikationssystem mit einer zentralen Sendeeinrichtung - insbesondere einem Satelliten - zum Übermitteln von Datensignalen sowie einem Kommunikationsgerät zum Empfangen dieser Datensignale vorgeschlagen wird, wobei das Komntunikationsgerät sein Verhalten zum Empfangen der Datensignale auf Basis von ergänzenden Informationen abstimmt, welche dem Kommunikationsgerät getrennt von den Datensignalen übermittelt werden, kann wiederum auch unabhängig von den zuvor beschriebenen Erfindungsgedanken eingesetzt werden. In diesem Zusammenhang wird ferner ein Kommunikationsgerät zur Nutzung in einem entsprechenden Kommunikationssystem vorgeschlagen, wobei das Kommunikationsgerät zunächst Empfangsmittel zum Empfangen der Datensignale aufweist, welche von einer zentralen Sendeeinrichtung übermittelt werden. Es sind ferner Mittel zum Empfangen von ergänzenden Informationen vorgesehen, welche Auskunft hinsichtlich bestimmter Eigenschaften der zu empfangenden Datensignale beinhalten, wobei die Empfangsmittel des Kommunikationsgeräts ihr Empfangsverhalten auf Basis der ergänzenden Informationen abstimmen. Ferner wird auch ein Verfahren zum Übermitteln und Empfangen von Datensignalen vorgeschlagen, wobei ein zum Empfangen der Signale vorgesehenes Kommunikationsgerät sein Verhalten zum Empfangen der Datensignale auf Basis von ergänzenden Informationen abstimmt, welche getrennt von den Datensignalen übermittelt werden.

Bei diesen - beispielsweise in einem getrennten Frequenzband - ergänzend zur Verfügung gestellten Informationen kann es sich insbesondere um Information hinsichtlich der Positionen und/oder Bewegungen des Kommunikationsgeräts und/oder der Sendeeinrichtung handeln. Beispielsweise kann also vorgesehen sein, dass das Kommunikationsgerät zusätzlich einen Navigationsempfänger aufweist bzw. einen Navigationsempfänger dem Kommunikationsgerät zugeordnet ist, mit dessen Hilfe Navigationsdaten über das Gerät selbst sowie über den Satelliten bzw. die Sendeeinrichtung erhalten werden. Auf Basis dieser Informationen kann dann beispielsweise das Kommunikationsgerät die Frequenz des eintreffenden Datensignals besser abschätzen, da der aufgrund der Relativbewegung zwischen dem Satelliten und dem Gerät auftretende Dopplereffekt berücksichtigt werden kann. Auch eine verbesserte Abschätzung der Phase des Datensignals, welche für einen zuverlässigen Empfang des Signals unerlässlich ist, wird hierdurch gewährleistet.

Eine besonders vorteilhafte Ausgestaltung dieses Verfahrens besteht darin, dass die ergänzenden Informationen zur Optimierung des Empfangs der Datensignale zwar von der gleichen Sendeeinrichtung, allerdings unabhängig von den Datensignalen mit einer anderen Frequenz übertragen werden. Es wird in diesem Fall also beispielsweise ein Satellit eines Navigationssystems gleichzeitig auch als Sendeeinrichtung für das Kommunikationssystem genutzt, um sowohl die Datensignale als auch die Navigationsinformationen bereit zu stellen. In diesem Fall wird in besonders einfacher und effektiver Weise ein optimierter Datenempfang durch das Kommunikationsgerät ermöglicht. Die Maßnahmen zur Erweiterung des Funktionsumfangs des Navigationssatelliten gemäß dieser vorteilhaften Weiterbildung halten sich in Grenzen, so dass hierdurch in besonders einfacher und effektiver Weise die Grundlagen für ein tatsächlich global zur Verfügung stehendes und zuverlässig arbeitendes Notruf-/Warnsystem geschaffen werden könnten.

Eine weitere vorteilhafte Weiterbildung betrifft wiederum Maßnahmen zur Übermittlung von Warninformationen von dem Satelliten an das bzw. die Kommunikationsgeräte. Da derartige Warninformationen möglichst allumfassend an betroffene Personen übermittelt werden sollten, sollte auch gewährleistet sein, dass sich innerhalb von geschlossenen Gebäuden befindende Geräte die Informationen noch empfangen können. Die hierzu üblicherweise verwendeten Sendeleistungen von Satelliten reichen allerdings für den Empfang von Signalen innerhalb geschlossener Gebäude in der Regel nicht aus. Der Grund hierfür liegt darin, dass die Signale in der Regel vorwiegend über Reflektionen an in der Umgebung befindlichen Objekten zu dem Empfänger gelangen und dementsprechend die letztendlich eintreffenden Signale für eine eindeutige Auswertung zu schwach sind.

Um dieses Problem zu umgehen, ist gemäß einer weiteren vorteilhaften Weiterbildung vorgesehen, dass die von dem Satelliten an das bzw. die Kommunikationsgeräte übermittelten Daten einen die Textinformationen - also bspw. die Warnmeldung - beinhaltenden Informationsanteil sowie einen Koordinierungsanteil enthalten, welcher Koordinierungsanteil von dem Kommunikationsgerät zum Synchronisieren auf den Satelliten genutzt wird. Die die Textinformationen beinhaltenden Daten werden dann von dem Satelliten zumindest zweimal übermittelt, wobei das Kommunikationsgerät die während den mehrmaligen Übertragungen empfangenen Informationsanteile phasenrichtig summiert und aus dem hierbei gebildeten Summensignal die Textinformationen ermittelt. Durch das mehrmalige Übermitteln der Informationen und das mit Hilfe des Koordinierungsanteils ermöglichte phasenrichtige Aufsummieren der Informationsanteile kann dann letztendlich ein Summensignal gebildet werden, welches stark genug für eine eindeutige und fehlerfreie Auswertung der Informationen ist. Auch der Empfang der Informationen innerhalb geschlossener Gebäude wird auf diese Weise ermöglicht. Dabei ist nicht einmal das regelmäßige oder periodische Wiederholen der Datenübermittlung erforderlich, da der Koordinierungsanteil auch dazu genutzt werden kann, die - vorzugsweise nachfolgenden - Textinformationen eindeutig zu identifizieren. Die Einsatzmöglichkeit im Rahmen eines globalen Warnsystems werden auf diese Weise deutlich erhöht, da auch sehr einfache Geräte als Empfänger genutzt werden können, die nicht zwangsläufig mit einer Empfangseinrichtung außerhalb von Gebäuden verbunden sein müssen.

Dieser Gedanke, Informationen mehrmals über den Satelliten zu senden und durch geeignete Maßnahmen sicherzustellen, dass aufgrund des mehrfachen Empfangs der Signale das Kommunikationsgerät letztendlich in der Lage ist, im Vergleich zu einem einmaligen Empfang eine zuverlässigere Datenauswertung vorzunehmen, kann wiederum auch unabhängig von der Art der Übermittelten Information eingesetzt werden. Gemäß diesem Aspekt wird also ein System zur vorzugsweisen Nutzung in einem globalen Warnsystem zum Übermitteln von Nachrichten von einer zentralen Sendeeinrichtung über einen Satelliten an zumindest ein Kommunikationsgerät vorgeschlagen, wobei von dem Satelliten übermittelte Daten einen die Nachrichten beinhaltenden Informationsanteil sowie einen Koordinierungsanteil enthalten, welcher von dem Kommunikationsgerät zum Synchronisieren auf den Satelliten genutzt wird, und wobei vorgesehen ist, dass die die Daten beinhaltenden Daten von dem Satelliten zumindest zweimal übermittelt werden und das Kominunikationsgerät die während den mehrmaligen Übertragungen empfangenen Informationsanteile phasenrichtig summiert und aus dem hierbei gebildeten Summensignal die Nachrichten übermittelt. Ferner wird auch ein Kommunikationsgerät zum Empfangen von Satellitensignalen - vorzugsweise für die Nutzung in einem globalen Warnsystem - vorgeschlagen, welches Empfangsmittel zum Empfangen von Daten, welche einen Nachrichten beinhaltenden Informationsanteil sowie einen Koordinierungsanteil enthalten, aufweist, wobei der Koordinierungsanteil von den Empfangsmitteln zum Synchronisieren auf einen die Daten übermittelnden Satelliten genutzt, und wobei die Empfangsmittel ferner dazu ausgestaltet sind, die bei einer mehrmaligen Übertragung der Daten empfangenden Informationsanteile phasenrichtig zu summieren und aus dem hierbei gebildeten Summensignal die Nachrichten zu ermitteln.

Im Rahmen einer vorteilhaften Weiterbildung dieses Verfahrens ist es - wie bereits angedeutet - nicht zwingend erforderlich, dass die Wiederholung der Informationsübermittlung periodisch erfolgt. Vielmehr können in den aufeinanderfolgenden Übertragungszeiträumen durchaus verschiedene Nachrichten übermittelt werden, wobei die Kommunikationsgeräte dann jeweils Summensignale der der jeweiligen Nachricht entsprechenden Informationsanteile bilden. Diese Möglichkeit wird dadurch erzielt, dass die in dem Informationsanteil enthaltene Nachricht zusätzlich durch den Koordinierungsanteil eindeutig gekennzeichnet wird. Vereinfacht gesprochen wird in dem Koordinierungsanteil also eine Nummer für die nachfolgende Nachricht angegeben, so dass das Kommunikationsgerät in der Lage ist, jeweils die entsprechenden Informationsanteile richtig zu summieren. Neben der Hauptaufgabe, nämlich ein Synchronisieren bzw, eine Phasenabschätzung des Satellitensignals zu ermöglichen, besteht also eine weitere Aufgabe des Koordinierungsanteils darin, dem Kommunikationsgerät mitzuteilen, welche Nachricht gerade übermittelt wird. Hierdurch ist sichergestellt, dass auch verschiedene Nachrichten quasi gleichzeitig übermittelt werden können.

Dieses Verfahren der phasenrichtigen Summierung von Informationsanteilen kann im Übrigen auch unabhängig davon eingesetzt werden, ob die Übermittlung der Signale durch einen Satelliten oder eine anderweitige Sendeeinrichtung erfolgt. Je nach Art der Sendeeinrichtung ist es allerdings vorteilhaft, den Koordinierungsanteil überproportional zu gewichten. Hierdurch ist sichergestellt, dass auch tatsächlich eine phasenrichtige Aufsummierung der Informationsanteile und damit letztendlich eine Auswertung der übermittelten Informationen möglich ist.

Die als Warninformationen von dem Satelliten an die Kommunikationsgeräte übermittelten Textinformationen sind wie bereits erläutert erfindungsgemäß mit Zusatzinformationen versehen, welche über die örtliche Relevanz der Textinformationen Auskunft geben, um den Empfängern der Informationen die Möglichkeit zu geben, abzuschätzen, inwiefern die Warninformationen für sie relevant sind. Ergänzend hierzu kann allerdings auch eine nutzerspezifische Relevanz vorliegen. So ist bspw. die Warnung vor einem Dammbruch für ein Flugzeug uninteressant, selbst wenn sich das Flugzeug oberhalb des von dem Dammbruch evtl. gefährdeten Gebiets befindet.

Gemäß einer weiteren vorteilhaften Weiterbildung ist dementsprechend vorgesehen, dass die Zusatzinformationen auch Auskunft über eine nutzerspezifische Relevanz der Nachrichten geben, wobei gemäß einer besonders vorteilhaften Weiterbildung jedes Kommunikationsgerät zunächst unter Auswertung dieser Zusatzinformationen überprüft, ob die Nachrichten im Hinblick auf den Standort des Geräts und/oder im Hinblick auf den Nutzer für das jeweilige Kommunikationsgerät relevant sind, und abhängig von dieser Überprüfung die Nachrichten verarbeitet bzw. wiedergibt. Dem Kommunikationsgerät müssen somit zusätzliche Informationen über den aktuellen Standort sowie dessen Verwendung zur Verfügung gestellt werden, was in besonders einfacher Weise bspw. über eine manuelle Eingabe des Nutzers des Kommunikationsgeräts erfolgen kann. Auch andere Möglichkeiten zur Ortsbestimmung wären allerdings denkbar, insbesondere die Nutzung von Navigationssignalen oder von Zellen-Identifikationsnummern eines Mobilfunknetzes.

Dieser Gedanke, Mittel bereitzustellen, durch welche gewissermaßen eine Vorfilterung der Warninformationen erfolgen kann, so dass den Nutzern der Kommunikationsgeräte letztendlich lediglich diejenigen Informationen angezeigt bzw. zur Verfügung gestellt werden, die für diese auch mit hoher Wahrscheinlichkeit relevant sind, kann ebenfalls unabhängig von den zuvor beschriebenen Erfindungsgedanken zum Einsatz kommen. Gemäß einem weiteren Aspekt wird dementsprechend ein Informationssystem zum Übermitteln von Nachrichten von einer zentralen Sendeeinrichtung, insbesondere einem Satelliten, an eine Vielzahl von Kommunikationsgeräten vorgeschlagen, wobei von der zentralen Sendeeinrichtung übermittelte Daten neben der eigentlichen Nachricht Zusatzinformationen beinhalten, welche über eine örtliche und/oder nutzerspezifische Relevanz der Nachrichten Auskunft geben, und wobei jedes Kommunikationsgerät zunächst unter Auswertung der Zusatzinformation überprüft, ob die Nachrichten für das jeweilige Kommunikationsgerät relevant sind, und abhängig von dieser Überprüfung die Nachrichten verarbeitet bzw. wiedergibt. Dieser Aspekt betrifft auch ein Kommunikationsgerät zur Nutzung in einem entsprechenden Informationssystem, welches Empfangsmittel zum Empfangen von Daten aufweist, die Nachrichten sowie Zusatzinformationen beinhalten, welche über eine örtliche und/oder nutzerspezifische Relevanz der Nachrichten Auskunft geben. Ferner weist das Kommunikationsgerät Auswertemittel, zum Prüfen anhand der Zusatzinformationen, ob die Nachrichten für das Kommunikationsgerät relevant sind oder nicht, sowie Verarbeitungs- bzw. Wiedergabemittel zum Verarbeiten bzw. Wiedergeben der Nachrichten in Abhängigkeit von dem Ergebnis der Überprüfung durch die Auswertemittel auf.

Die Informationen hinsichtlich der örtlichen Relevanz der Informationen können bspw. ein geographisches Gebiet definieren, für welches die Nachrichten relevant sind. Dieses Gebiet kann bspw. durch mehrere Orte definiert werden, welche das Gebiet einschließen, wobei diese Orte bspw. durch eine Referenzposition sowie mehrere Relativpositionen angegeben werden. Die Genauigkeit der Positionsangaben für die verschiedenen Positionen kann dabei unter anderem von der maximalen Größe des betroffenen Gebiets abhängig gemacht werden, wobei üblicherweise vorgesehen ist, dass die Referenzposition mit einer höheren Genauigkeit angegeben wird als die Relativpositionen. Hierdurch kann die Menge der zu übermittelnden Daten für die Angabe des betroffenen Gebiets auf ein verhältnismäßig geringes Maß reduziert werden.

Das Komunikationssystem weist vorzugsweise mehrere Satelliten auf, welche einen Datenaustausch in verschiedenen Frequenzbereichen ermöglichen, wobei dann vorgesehen ist, dass das Kommunikationsgerät Daten mit der Frequenz desjenigen Satelliten übermittelt, der aufgrund seiner aktuellen Position eine bestmögliche Übertragung gewährleistet. Auch in diesem Fall ist somit die Nutzung von Informationen, welche über die aktuelle Position der verschiedenen Satelliten Auskunft geben, von Vorteil. In besonders vorteilhafter Weise kann dementsprechend vorgesehen sein, dass die Satelliten eines Navigationssystems (beispielsweise des bereits bestehenden GPS-Systems oder des in Planung befindlichen Galileo-Systems) gleichzeitig auch zur Realisierung des erfindungsgemäßen Kommunikationssystems eingesetzt werden, also neben dem Sender zum Übermitteln der Navigationsinformationen gleichzeitig auch Sende- und Empfangsmittel für die Datenübertragung im Rahmen des erfindungsgemäßen Kommunikationssystems aufweisen. Die erforderlichen Erweiterungen für die Navigationssatelliten halten sich hierbei in Grenzen, so dass in besonders einfacher Weise ein tatsächlich global zur Verfügung stehendes und zuverlässig arbeitendes Notruf-/Warnsystem realisiert werden könnte.

Die zum Einsatz kommenden Kommunikationsgeräte können unterschiedlich ausgestaltet sein und je nach Einsatzgebiet verschiedene Funktionen bieten. Auch die Nutzung sehr einfacher Geräte, die lediglich für den Empfang von Warninformationen vorgesehen sind, wäre denkbar.

Nachfolgend soll die Erfindung anhand der beiliegenden Zeichnungen näher erläutert werden. Es zeigen:
- Fig. 1: schematisch die Bestandteile eines erfindungsgemäßen Kommunikationssystems;
- Fig. 2: den Ablauf eines Verfahrens zur Übermittlung eines Notrufs von einem Kommunikationsgerät aus;
- Fig. 3a: eine denkbare Struktur eines Datenpakets zur Übermittlung einer Anfrage bei dem Verfahren nach Fig. 2;
- Fig. 3b: die Struktur einer von einem Kommunikationsgerät übermittelten Textnachricht;
- Fig. 4a: die Struktur einer Antwortnachricht bei dem Verfahren nach Fig. 2;
- Fig. 4b: die Struktur einer globalen Warnmeldung;
- Fig. 5a: ein zeitliches Ablaufschema zur Übermittlung eines Notrufs;
- Fig. 5b: schematisch die Struktur eines Systems zum optimierten Datenempfang;
- Fig. 6: ein Schema zur Verdeutlichung der von den Satelliten nutzbaren Frequenzen;
- Fig. 7: die Aufteilung des für die Datenübermittlung genutzten Frequenzbereichs;
- Fig. 8: die Vorgehensweise zum Definieren eines Gebiets, für welches eine übermittelte Warnmeldung relevant ist; und
- Fig. 9: ein Schema zur Verdeutlichung der Vorgehensweise zum Empfang einer Informationen innerhalb eines geschlossenen Gebäudes.

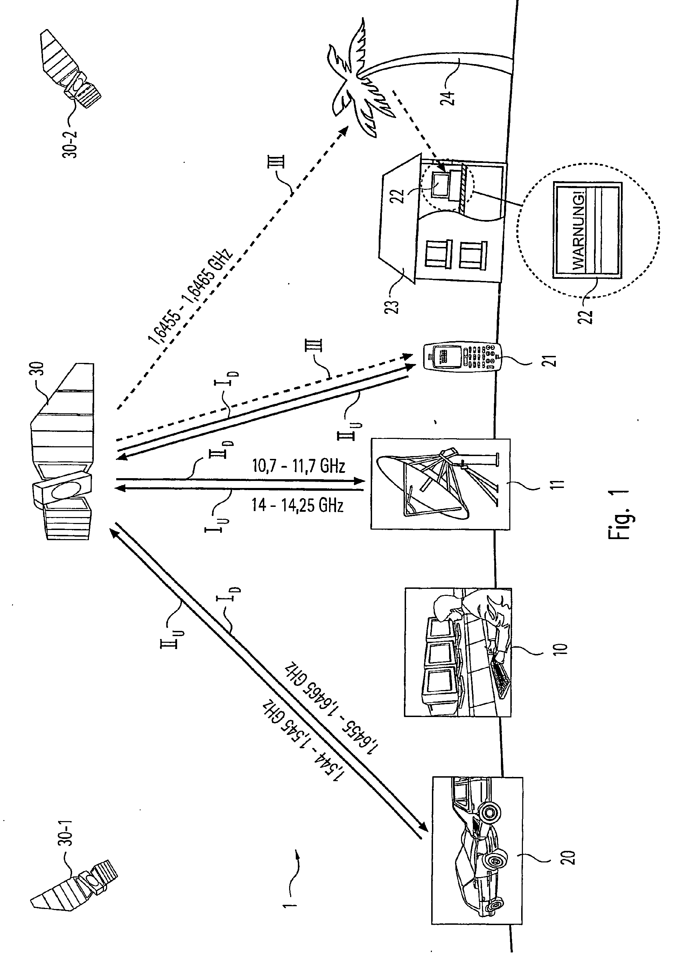

Fig. 1 zeigt zunächst schematisch die Bestandteile eines allgemein mit dem Bezugszeichen 1 versehenen erfindungsgemäßen Kommunikationssystems, welches insbesondere zur Realisierung eines globalen Notruf-/Warnsystems genutzt werden kann.

Die Zentrale des Notruf-/Warnsystems 1 wird entsprechend der Darstellung durch eine zentrale Einrichtung 10, bspw. eine Telefonleitzentrale gebildet, welche eingehende Notrufe von Teilnehmern des Systems empfängt, auswertet und - sofern erforderlich - geeignete Hilfsmaßnahmen einleitet. Im Falle des Unfalls eines Teilnehmers kann durch die Zentrale 10 bspw. ein Rettungswagen oder ein Rettungshubschrauber informiert und zu der Unfallstelle beordert werden. Eine weitere Aufgabe der Zentrale 10 besteht auch darin, eingehende Notrufe zu bestätigen und entsprechende Antworten zu übermitteln. Schließlich kann die Zentrale 10 auch als Leitstelle eines Warnsystems genutzt werden und für den Fall einer bevorstehenden Gefahr Informationen an die Teilnehmer des Systems 1 senden.

Schematisch dargestellt in Fig. 1 sind drei Teilnehmer des erfindungsgemäßen Kommunikationssystems welche im Hinblick auf ihre Ausgestaltung und Positionierung sehr unterschiedlicher Natur sein können. Ein erster Teilnehmer 20 wird bspw. durch ein Fahrzeug gebildet, wobei das in dem Fahrzeug angeordnete Kommunikationsgerät dazu ausgestaltet ist, im Falle eines Unfalls und bspw. der Auslösung eines Airbags Hilfe anzufordern. Dies kann manuell durch den Benutzer des Fahrzeugs initiiert werden, es wäre allerdings durchaus denkbar, dass das Kommunikationsgerät automatisch bei Auftreten eines schwereren Unfalls einen Notruf sendet.

Ein zweiter Teilnehmer 21 wird durch ein tragbares Kommunikationsgerät gebildet, welches insbesondere auch durch ein Mobiltelefon gebildet sein kann. Dieses Telefon 21 weist dementsprechend neben den normalen Möglichkeiten zur Mobilfunktelephonie Erweiterungen auf, welche das Übermitteln eines Notrufs bzw. das Empfangen einer entsprechenden Antwort oder einer Warnmeldung ermöglichen.

Ein dritter Teilnehmer ist beispielhaft durch ein Elektrogerät, bspw. einen Fernseher 22, gebildet. Eine Besonderheit dieses dritten Teilnehmers besteht darin, dass der Fernseher 22 innerhalb eines Gebäudes 23 angeordnet ist, was Auswirkungen auf die Möglichkeiten zur Datenkommunikation hat, was später noch näher erläutert wird. Das stationär genutzte Gerät 22 kann in diesem Fall deshalb ausschließlich für den Empfang von Warninformationen durch das System 1 vorgesehen sein, nicht allerdings zum Übermitteln von Notrufen.

Anzumerken ist, dass die Endgeräte des erfindungsgemäßen Systems 1 sehr vielfältig ausgestaltet sein können und unterschiedlichste Funktionen aufweisen können. Auch die Nutzung innerhalb des erfindungsgemäßen Systems 1 kann in unterschiedlicher Weise erfolgen. So kann - wie bereits erläutert - vorgesehen sein, dass gewisse Geräte ausschließlich für den Empfang von Warnmeldungen durch das System 1 geeignet sind, während hingegen andere Geräte sowohl Notrufe (ggf. unter bestimmten Voraussetzungen automatisch) übermitteln und ergänzend hierzu auch Warninformationen empfangen können. Auch die im Rahmen des Systems ergänzend von den verschiedenen Teilnehmern 20, 21 und 22 genutzten Informationen können je nach Ausgestaltung der Geräte unterschiedlicher Art sein.

Für die Kommunikation zwischen den verschiedenen Teilnehmern 20, 21 und 22 und der Zentrale 10 werden als Verbindungselemente Satelliten 30, 30-1, 30-2 eingesetzt, über welche die Datenverbindung aufgebaut wird. Die Verbindung zur Zentrale 10 wird hierbei mit Hilfe einer Sende-/Empfangsstation 11 ermöglicht, welche in Verbindung mit der Zentrale 10 steht. Die Anordnung der Satelliten und deren Anzahl ist vorzugsweise derart gewählt, dass weltweit ein Verbindungsaufbau zwischen den Teilnehmern 20, 21, 22 und einem der Satelliten 30 ermöglicht wird, wobei vorzugsweise jeweils zumindest drei Satelliten 30 sich innerhalb des Sende- und Empfangsbereichs eines Kommunikationsgerätes 20, 21, 22 befinden sollten, um Alternativverbindungen im Falle des Ausfalls einer Datenverbindung zu ermöglichen.

Die zwischen den verschiedenen Komponenten des erfindungsgemäßen Systems 1 ausgetauschten Signale können entsprechend ihrer Nutzung innerhalb des Notruf-/Warnsystems unterschieden werden. Eine erste Funktion des Systems 1 stellt wie bereits erwähnt die Abgabe eines Notrufs durch die Teilnehmer sowie die entsprechende Beantwortung dieses Notrufs durch die Zentrale 10 dar. Die hierbei entstehenden Kommunikationsverbindungen können nach Richtung der übermittelten Daten sowie entsprechend den verschiedenen Komponenten, zwischen denen eine Kommunikationsverbindung besteht, wie folgt unterschieden werden.

So sind zunächst zwei sog. Forward-Verbindungen vorgesehen, welche für die Übermittlung von Informationen von der Zentrale 10 zu den Empfängern 20 und 21 genutzt werden. Diese Forward-Verbindungen werden ferner noch danach unterschieden, ob sie in Richtung auf den Satelliten 30 gerichtet sind oder von diesem wegführen. Dementsprechend erfolgt eine Übermittlung von Informationen von der Zentrale 10 bzw. der Sende-/Empfangsstation 11 also über einen sog. Forward-Uplink I_{U} zum Satelliten 30 sowie über einen Forward-Downlink I_{D} von dem Satelliten 30 zu den Kommunikationsgeräten 20, 21. Die Übermittlung von Informationen von den Endgeräten 20, 21 zu der Zentrale 10 hin hingegen erfolgt über sog. Reverse-Verbindungen, genauer gesagt über einen Reverse-Uplink II_{U} von den Geräten 20, 21 zu dem Satelliten 30 und einen Reverse-Downlink II_{D} von dem Satelliten 30 zu der Sende-/Empfangsstation 11 der Zentrale 10. Die verschiedenen Vorgehensweisen zur Datenübermittlung insbesondere im Rahmen des Reverse-Uplinks II_{U} und des Forward-Downlinks I_{D} werden später noch ausführlich erläutert, die Kommunikation zwischen dem Satelliten 30 und der Sende-/Empfangsstation 11 hingegen kann im Rahmen üblicher Verfahren erfolgen, die nicht Gegenstand der vorliegenden Erfindung sind.

Weitere Kommunikationsverbindungen, die im Rahmen des erfindungsgemäßen Notruf-/Warnsystems aufgebaut werden, dienen entsprechend der zweiten Funktion des Systems 1 dazu, Warninformationen zu übermitteln. In diesem Fall ist nur eine Kommunikation in Richtung von der Zentrale 10 zu den Endgeräten 21 und 22 vorgesehen, es wird also wiederum ein (in üblicher Weise aufgebauter) Forward-Uplink III_{U} zu dem Satelliten 30 sowie ein Forward-Downlink III_{D} von dem Satelliten 30 zu den Endgeräten 21, 22 gebildet. Auch die speziellen Maßnahmen zur Bildung des Forward-Downlinks III_{D} für die Übermittlung von Warninformationen werden später noch ausführlich erläutert.

Die zum Aufbauen der verschiedenen Kommunikationsverbindungen genutzten Frequenzbereiche können unter Berücksichtigung von Regulierungsbestimmungen prinzipiell in gewünschter Weise gewählt werden. Wie allerdings bereits eingangs erläutert wurde, sollten die Endgeräte weitestgehend auf bereits zum Einsatz kommenden Technologien basieren. Es hat sich dementsprechend als vorteilhaft herausgestellt, für den Forward-Downlink Frequenzen im sog. L-Band im Bereich zwischen 1,6455 und 1,6465 GHz und für den Reverse-Uplink Frequenzen wiederum im L-Band im Bereich zwischen 1,544 und 1,545 GHz einzusetzen. Der Vorteil dieser Auswahl liegt darin, dass diese Frequenzbereiche nahe an den von bereits existierenden Mobilfunknetzen genutzten Frequenzen liegen und darüber hinaus auch die im Rahmen von Navigationssystemen genutzten Frequenzbereiche einschließen. Sende- und Empfangsmittel zur Nutzung derartiger Frequenzen sind somit bereits vielfach in Verwendung und können dementsprechend auch bei Geräten im Rahmen des erfindungsgemäßen Systems 1 eingesetzt werden. Für den Forward-Uplink werden vorzugsweise Frequenzen im sog. Ku-Band zwischen 14 und 14,25 GHz und für den Reverse-Downlink Frequenzen im X-Band im Bereich zwischen 10,7 und 11,7 GHz eingesetzt werden. Der Verteil der Wahl dieser Frequenzen liegt darin, dass die hierzu genutzten Antennen geometrisch klein gestaltet werden können. Nochmals sei allerdings darauf hingewiesen, dass auch andere Frequenzen für die verschiedenen Signalwege zum Einsatz kommen könnten.

Im folgenden soll zunächst der Datenaustausch zwischen einem Endteilnehmer 20, 21 und dem Satelliten 30 im Rahmen eines Notrufs besprochen werden. Hierbei soll der Benutzer des Geräts in der Lage sein, mittels einer SMS- oder Textnachricht Hilfe anzufordern. Ferner soll für die Zentrale 10 feststellbar sein, wo genau sich der Benutzer des Geräts aufhält.

Besonders kritisch ist in diesem Fall die Übermittlung der Informationen von den Geräten 20, 21 zu dem Satelliten 30, was auf die geringe Sendeleistung der Geräte 20, 21 einerseits sowie den hohen Datenverkehr andererseits zurückzuführen ist. Hierbei ist zunächst zu berücksichtigen, mit welcher Häufigkeit die Abgabe eines Notrufs zu erwarten ist. Dabei haben statistische Erhebungen gezeigt, dass die Hauptursache für die Initiierung von Notrufen Verkehrsunfälle sein werden. In Deutschland bspw. übersteigt die Anzahl von Verkehrsunfällen die Anzahl denkbarer anderer Ereignisse bei weitem. Geht man davon aus, dass die statistische Häufigkeit für das Auftreten eines Verkehrunfalls in Europa - was etwa dem Einzugsgebiet eines Satelliten entspricht - in etwa gleich ist, so ergibt sich eine ungefähre Frequenz von 0,36 Notrufen/s für einen einzelnen Satelliten. Da die Übermittlung einer Notrufnachricht mehrere Sekunden in Anspruch nimmt, besteht also die Gefahr, dass mehrere Endteilnehmer gleichzeitig versuchen, einen Notruf an den Satelliten zu übermitteln. Die Überlappung dieser Signale führt aufgrund der niedrigen Sendeleistungen der Geräte allerdings letztendlich dazu, dass der Satellit nicht mehr in der Lage ist, die Informationen zu trennen und eindeutig zu identifizieren. Die Übermittlung beider Notrufe würde in diesem Fall also fehlschlagen.

Um derartige Konfliktsituationen zu vermeiden, wird für die Übermittlung eines Notrufs von einem Endteilnehmer und die Beantwortung dieses Notrufs durch die

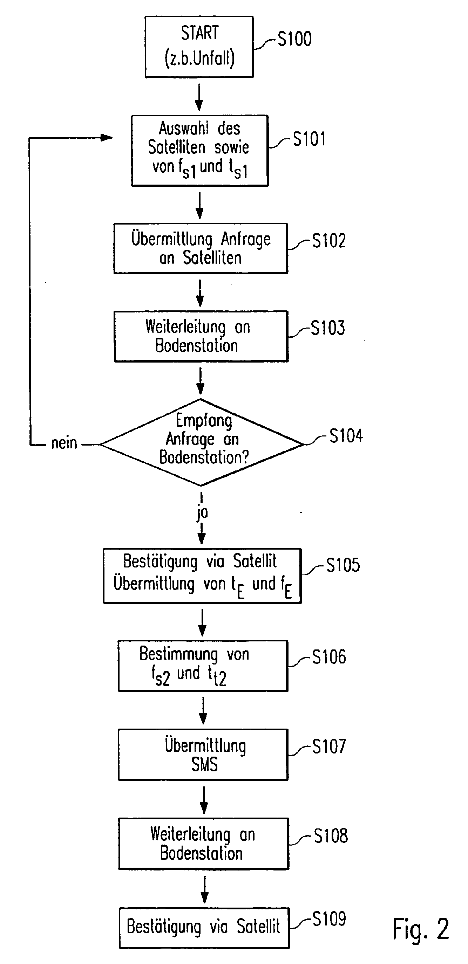

Zentrale 10 des Systems 1 ein spezielles Reservierungsverfahren vorgeschlagen, welches nachfolgend anhand des Ablaufdiagramms von Fig. 2 näher erläutert werden soll.

Grundgedanke des schematisch in Fig. 2 dargestellten Reservierungsverfahrens ist, dass im Rahmen einer Initialisierungsprozedur das Kommunikationsgerät, welches einen Notruf übermitteln möchte, zunächst eine kurze Meldung an den Satelliten bzw. die Zentrale übermittelt und die Übertragung eines Notrufs bzw. allgemein einer Nachricht ankündigt. Dem Gerät wird dann ein entsprechender Übermittlungszeitraum reserviert, in dem ausschließlich das entsprechende Gerät zur Übertragung einer Nachricht befugt ist. Durch später noch näher erläuterte Maßnahmen stellt das Gerät dann sicher, dass die Nachricht zeit- und frequenzgenau an dem Satelliten eintrifft, so dass selbst bei niedrigen Sendeleistungen ein zuverlässiger Empfangs ermöglicht wird.

Voraussetzungen für diese besondere Vorgehensweise sind, dass das Endgerät zusätzlich einen Navigationsempfänger aufweist, der ebenfalls in Kontakt mit dem Satelliten steht. Dem Gerät ist somit einerseits seine eigene Position, Geschwindigkeit und Bewegungsrichtung sowie andererseits die Position des Satelliten, dessen Geschwindigkeit sowie dessen Bewegungsrichtung bekannt. Darüber hinaus können die von dem Navigationsempfänger als zusätzliche Hilfestellung erhaltenen Informationen dazu genutzt werden, das Gerät nahezu perfekt hinsichtlich Zeit und Frequenz auf den Satelliten zu synchronisieren, so dass allenfalls Abweichungen im Nanosekundenbereich auftreten. Diese Informationen können dementsprechend dazu genutzt werden, frequenz- und zeitrichtig Informationen an den Satelliten zu übermitteln. Das in Fig. 2 dargestellte Verfahren stellt sich dementsprechend wie folgt dar.

Nach dem Auftreten eines Notfalls in Schritt S100 wählt das Gerät zunächst auf Basis der von dem Navigationsempfänger zur Verfügung gestellten Informationen hinsichtlich der Positionen und Bewegungen des Kommunikationsgeräts und der Satelliten einen geeigneten Satelliten aus, der aufgrund seiner aktuellen Position eine bestmögliche Datenübertragung gewährleistet. Es wird also derjenige Satellit gewählt, bei dem die beste Empfangsleistung im Hinblick auf die zu übermittelnden Signale zu erwarten ist. Darüber hinaus ist dem Gerät bekannt, auf welcher Frequenz der gewählte Satellit Informationen empfangen kann. Es wird dementsprechend zunächst über die Sendemittel des Kommunikationsgeräts eine erste Sendefrequenz fₛ₁ ausgewählt, welche unter Berücksichtigung der Relativbewegung zwischen Satellit und Kommunikationsgerät ermittelt wird, um die während der Übermittlung zu dem Satelliten auftretende Frequenzverschiebung aufgrund des Dopplereffekts auszugleichen. Auf diese Weise ist also sichergestellt, dass an dem Satelliten das Signal exakt mit der von ihm "bevorzugten" Empfangsfrequenz eintrifft. Wie später noch näher erläutert wird, nutzt der Satellit vorzugsweise mehrere Empfangsfrequenzen parallel, wobei dann eine dieser Frequenzen nach dem Zufallsprinzip ausgewählt wird und auf Basis dieser zufällig gewählten Empfangsfrequenz sowie der Navigationsinformationen die erste Sendefrequenz fₛ₁ bestimmt wird.

Desweiteren ist im Rahmen des erfindungsgemäßen Verfahrens vorgesehen, dass der Satellit nur in bestimmten Zeitabschnitten Signale empfangen kann, mit denen die Übertragung einer Textinformation angekündigt wird. Im Rahmen dieses sog. Slotted-Aloha-Verfahrens ist also vorgesehen, dass nur innerhalb bestimmter Zeiträume derartige Anfragen an dem Satelliten eintreffen. Zwar besteht auch hier nach wie vor das Problem, dass beim gleichzeitigen Eintreffen zweier Anfragen keines der Signale von dem Satelliten ausgewertet werden kann, die Wahrscheinlichkeit einer Datenkollision bei einem derartigen Verfahren, bei denen die Zeiträume für Anfragen fest vorgegeben sind, wird allerdings deutlich reduziert. Auf Basis der Navigationsinformationen wird also in Schritt S101 desweiteren noch ein Startzeitpunkt tₛ₁ ausgewählt, zu dem die Anfrage von dem Gerät aus gesendet wird. Auch dieser Zeitpunkt wird nach dem Zufallsprinzip gewählt werden, jedoch mit der bereits genannten Einschränkung, dass das Signal letztendlich zu einem "zulässigen" Zeitpunkt am Satelliten eintrifft.

Anzumerken ist, dass anstellte fest vorgegebener Zeiträume, innerhalb derer jeweils eine Anfrage an dem Satelliten angenommen wird, auch ein größerer Zeitraum für die Übermittlung derartiger Anfragen zur Verfügung gestellt werden könnte. Die Wahrscheinlichkeit einer Datenkollision wäre in diesem Fall allerdings etwas höher.

Nach Auswahl der Sendefrequenz fₛ₁ und des Sendezeitpunkt tₛ₁ wird dann im darauffolgenden Schritt S102 eine Anfrage an den Satelliten übermittelt, in der - wie bereits erwähnt - die Übermittlung einer längeren Textnachricht angekündigt bzw. beantragt wird.

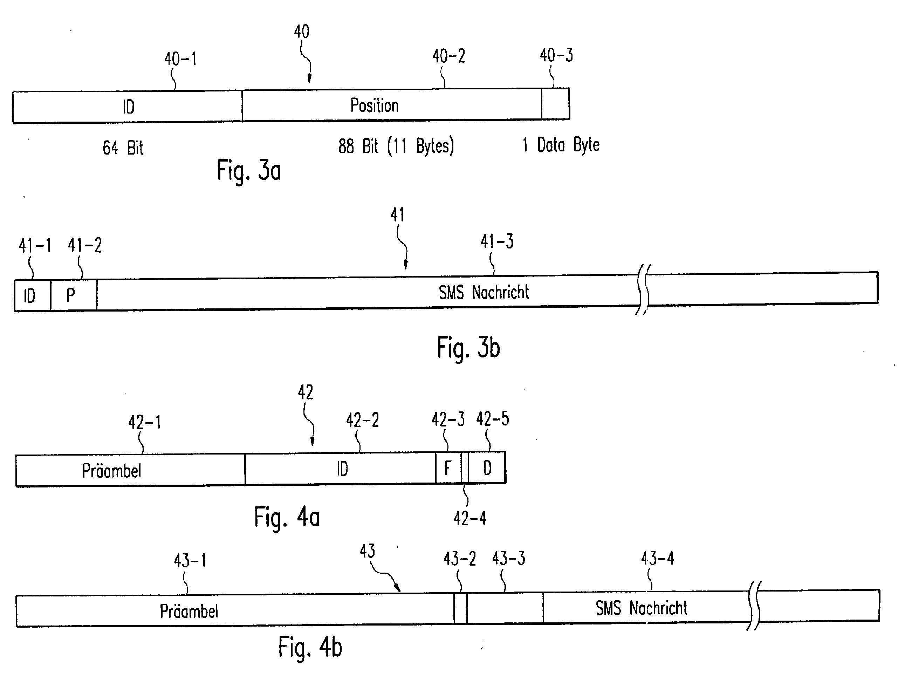

Ein mögliches Format für eine derartige Anfrage ist in Fig. 3a dargestellt, der entnommen werden kann, dass das Datenpaket aus insgesamt drei Bereichen besteht. Ein erster Bereich 40-1 des gesamten Datenpakets 40 dient dabei der Übermittlung einer Kennnummer (ID) des Kommunikationsgeräts, über welches dieses eindeutig identifizierbar ist. Entsprechend dem dargestellten Ausführungsbeispiel weist dieser Bereich eine Länge von 64 Bit auf. Der zweite Block 40-2 wird dazu genutzt, bereits die Position des Geräts sowie dessen aktuelle Bewegung zu übermitteln. Dieser Block weist eine Länge von 88 Bit auf, die sich wie folgt zusammensetzen:

| | |
|---|---|
| Breite | 25 Bit ⇒ 1,2m Auflösung |
| Länge | 25 Bit ⇒ 1,2m Auflösung |
| Höhe | 14 Bit ⇒ 1,2m Auflösung von 0-20000m |
| Geschwindigkeit | 12 Bit ⇒ 0,24m/s Auflösung bis zu 1000m/s |
| Kursrichtung | 12 Bit ⇒ 0,09° Auflösung |
| Gesamt | 88 Bit |

Ein dritter Block 40-3 dient dazu, bereits im Rahmen einer Kurznachricht Informationen über die Art des Notruf anzukündigen. Bspw. könnte hierdurch die Schwere des Notfalls sowie die Art der benötigten Hilfe kodiert werden. Insgesamt ergibt sich damit eine Länge von 160 Bit für dieses Anfrage-Datenpaket 40.

Anzumerken ist, dass die Ausgestaltung und Länge dieses ersten Datenpakets 40 auch anders gewählt werden könnte. Wesentlich allerdings ist, dass dieses zur Anfrage an den Satelliten genutzte Datenpaket deutlich kürzer ist als die eigentliche Nachricht, die noch zu einem späteren Zeitpunkt übermittelt wird. Auch die Verwendung eines Datenblocks zur Identifizierung des Kommunikationsgeräts ist erforderlich.

Entsprechend der Darstellung in Fig. 2 wird das im Rahmen der Anfrage gesendete Signal dann im Schritt S103 von dem Satelliten an die Bodenstation weitergeleitet, wobei im darauffolgenden Schritt S 104 von der Bodenstation überprüft wird, ob die Anfrage einzeln am Satelliten eingetroffen ist und dementsprechend das weitergeleitete Signal von der Bodenstation eindeutig ausgewertet werden kann oder ob ggf. eine Überlappung mit anderen Signalen - beispielsweise Anfragen von anderen Teilnehmern des Kommunikationssystems - stattfand. Der Satellit selbst ist also transparent, d.h. er leitet die Signale in beide Richtungen weiter, ohne sie näher zu analysieren bzw. auszuwerten. Lediglich eine Umsetzung in die verschiedenen Frequenzbereiche für die Uplinks und Downlinks wird durch den Satelliten vorgenommen.

Konnte an der Bodenstation bzw. der Zentrale 10 des Notrufsystems eine einzelne Anfrage empfangen werden, so wird diese inhaltlich ausgewertet, wobei dann in einem darauffolgenden Schritt S105 über den Satelliten eine Bestätigungsnachricht an das Kommunikationsgerät übermittelt wird, deren Struktur Fig. 4a entnommen werden kann. Konnte hingegen keine Anfrage empfangen werden, so wird das Kommunikationsgeräts auch keine Antwort erhalten und dementsprechend nach einem gewissen Wartezeitraum die Schritte S 101 und S 102 wiederholen, also versuchen, eine erneute Anfrage an den Satelliten übermitteln.

Die im Falle einer erfolgreichen Anfrage zurückgesendete Bestätigungsnachricht weist entsprechend dem dargestellten Ausführungsbeispiel in Fig. 4a eine Länge von insgesamt 120 Bit auf und setzt sich aus fünf einzelnen Datenblöcken zusammen. Ein erster Bock 42-1 stellt dabei eine (z.B. 32-Bit-lange) Präambel dar, welche von dem angesprochenen Empfänger dazu genutzt wird, sein Empfangsverhalten auf das Sendeverhalten des Satelliten zu synchronisieren. In dem zweiten Block 42-2 wird die Identifikationsnummer des Teilnehmers wiederholt, um sicherzustellen, dass von mehreren Endgeräten, die zu einem früheren Zeitpunkt eine Anfrage an den Satelliten übermittelt haben, ein einzelner Teilnehmer angesprochen werden kann. Mit dem dritten Block 42-3 wird mit Hilfe eines 8-Bit-langen Datenpakets eine Empfangsfrequenz f_{E} kodiert, auf welcher der Satellit zu einem späteren Zeitpunkt die Notrufnachricht empfangen möchte. Der darauffolgende Block 42-4 kodiert mit Hilfe von 4 Bit einen für den Empfang dieser Nachricht festgelegten Zeitbereich t_{E}. Der letzte Block 42-5 dient dazu, im Rahmen einer Kurzantwort den Empfang der Anfrage zu bestätigen und ggf. weitere Informationen über die Art der zur Verfügung gestellten Hilfe mitzuteilen.

Wiederum könnte die Struktur dieser Rückmeldung anderweitig gewählt werden, wobei allerdings die Blöcke zur eindeutigen Identifizierung des Kommunikationsgeräts sowie zur Übermittlung der festgelegten Empfangsfrequenz und Empfangszeit im Rahmen des erfindungsgemäßen Verfahrens erforderlich sind.

Nach Erhalt dieser Informationen bestimmt das Endgerät in dem darauffolgenden Schritt S 106 unter Berücksichtigung der ihm zur Verfügung stehenden Navigationsinformationen eine geeignete Sendefrequenz fₛ₂ sowie einen Sendezeitpunkt tₛ₂ für die Übermittlung der eigentlichen Notfallnachricht. Wiederum werden Frequenz und Zeitpunkt in geeigneter Weise ermittelt, um sicherzustellen, dass die Nachricht an dem Satelliten mit der zuvor festgelegten Empfangsfrequenz f_{E} und innerhalb des gewünschten Zeitraums t_{E} eintrifft.

In dem nächsten Schritt S107 wird dann in der zuvor bestimmten Weise die Textnachricht übermittelt, wobei hier ein Datenformat entsprechend der Darstellung in Fig. 3b gewählt wird. Diese Nachricht 41 besteht dementsprechend wiederum aus zwei Blöcken 41-1 und 41-2 zur Übermittlung der Identifizierungsnummer sowie zur Mitteilung von Navigationsinformationen über den Empfänger. Ein dritter Block (bspw. mit einer Länge von 1.600 Bit) stellt dann schließlich die eigentliche Nachricht bzw. den Notruf dar.

Aufgrund des zuvor durchgeführten Initialisierungsverfahrens bzw. der Reservierung eines bestimmten Empfangszeitraums ist sichergestellt, dass die Nachricht ungestört von anderweitigen Informationen als einzige zu dem vorgegebenen Empfangszeitpunkt an dem Satelliten eintrifft. Eine Überlappung mit anderweitigen Signalen wird hierdurch also ausgeschlossen, was besonders wichtig ist, um während des verhältnismäßig langen Übermittlungszeitraums eine Datenkollision zu vermeiden. Es ist also sichergestellt, dass die eigentliche Notfallnachricht ungestört an den Satelliten übermittelt und dort zuverlässig ausgewertet werden kann.

In den Schritten S108 und S109 schließlich erfolgt die Weiterleitung der Nachricht an die Bodenstation sowie eine erneute Bestätigung über den Satelliten. Für die Bestätigung wird wiederum das in Fig. 4a dargestellte Datenformat verwendet, wobei die Datenblöcke hinsichtlich der Frequenz und des Empfangszeitpunkts nunmehr allerdings leer bleiben. Sollte hingegen die Übermittlung der Nachricht fehlgeschlagen sein, so könnte dies ggf. mit Hilfe des fünften Datenblocks 42-5 angezeigt werden und der Teilnehmer zu einer erneuten Übermittlung der Notfallnachricht aufgefordert werden. In diesem Fall würden wiederum eine neue Empfangsfrequenz sowie ein Empfangszeitraum festgelegt und übermittelt werden.

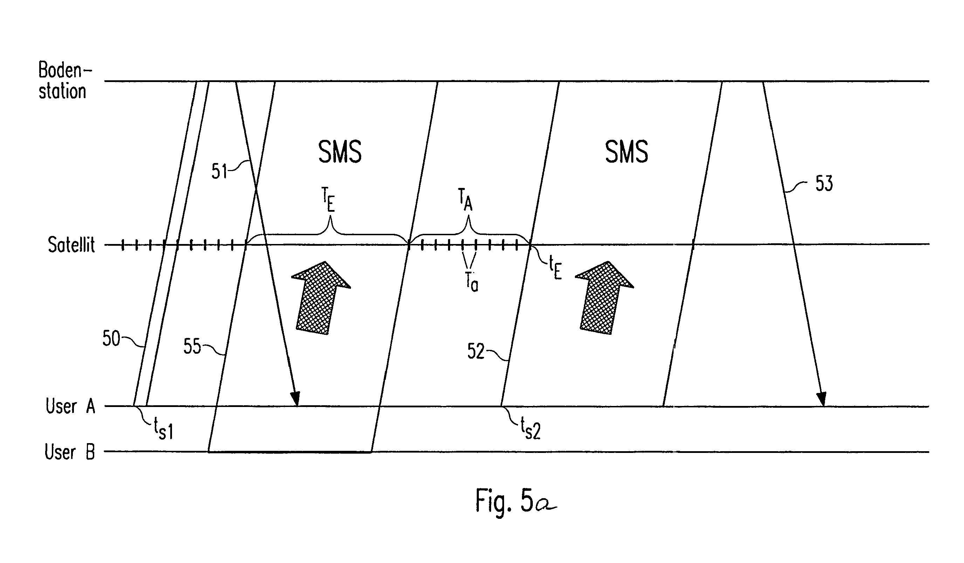

In Fig. 5a ist die besondere Vorgehensweise zur Übermittlung einer Notfallnachricht entsprechend dem erfindungsgemäßen Verfahren nochmals anhand eines Zeitschemas dargestellt. Dieser Darstellung kann insbesondere auch entnommen werden, dass das zeitliche Empfangsverhalten des Satelliten in zwei alternierende Zeitabschnitte T_{A} und T_{E} unterteilt werden kann, wobei der erste Zeitabschnitt T_{A} dazu dient, die Anfragen von den verschiedenen Kommunikationsgeräten zu empfangen und in weitere kleinere Zeitabschnitte Tₐ unterteilt ist, die jeweils für den Empfang einer Anfrage vorgesehen sind. Der zweite Teilabschnitt T_{E} ist zum Empfang genau einer SMS-Nachricht vorgesehen.

Entsprechend der Darstellung übermittelt somit ein Teilnehmer A zum Zeitpunkt tₛ₁ eine Anfrage 50, wobei dieser Zeitpunkt derart gewählt ist, dass diese Anfrage genau innerhalb eines vorgegebenen Zeitabschnitts Tₐ des Zeitraums T_{A} für den Empfang von Anfragen an dem Satelliten eintrifft. Nach Weiterleitung dieser Anfrage an die Bodenstation erfolgt die Rückmeldung über die erste Bestätigungsnachricht 51, mit der der Teilnehmer A über den für ihn vorgesehen Empfangszeitpunkt t_{E} sowie die entsprechende Frequenz informiert wird. Wie der Darstellung entnommen werden kann, erfolgt diese Rückmeldung unabhängig von der gleichzeitig vorgenommenen Übertragung einer Nachricht 55, die von einem zweiten Teilnehmer B derart übermittelt wurde, dass sie innerhalb des früheren Empfangszeitraums T_{E} für Textnachrichten am Satelliten eintrifft.

Auf Basis der im Rahmen der ersten Rückmeldung 51 erhaltenen Informationen und unter Berücksichtigung der Navigationsdaten ermittelt dann der Teilnehmer A den Zeitpunkt tₛ₂, zu dem die Übermittlung der Textnachricht gestartet wird, und zwar derart, dass sie zum vorgegebenen Zeitpunkt t_{E} am Satelliten eintrifft. Nach erfolgreicher Weiterleitung und Auswertung an der Bodenstation erfolgt dann die zweite Rückmeldung 53.

Wesentlich ist also, dass die Teilnehmer ihr Sendeverhalten derart abstimmen, dass sowohl die Anfragen als auch die eigentlichen Textnachrichten in geeigneter Weise an dem Satelliten eintreffen und dort optimal empfangen werden können. Dies gilt selbstverständlich nicht für die verschiedenen Rückmeldungen von dem Satelliten an die Teilnehmer, da der Satellit sein Sendeverhalten nicht auf jeden einzelnen Teilnehmer abstimmen kann. Auch in diesem Fall können allerdings die den Teilnehmern ergänzend zur Verfügung gestellten Navigationsinformationen sowie die anderweitigen Informationen über das zeitliche Sendeverhalten des Satelliten genutzt werden, um das Empfangsverhalten der Teilnehmer auf den Satelliten abzustimmen. Allein auf Basis dieser (Hilfs-)Informationen kann somit bereits eine Synchronisation bzw. Abschätzung der Phasenlage des Antwortsignals erzielt werden, um einen optimalen Datenempfang an den verschiedenen Teilnehmern sicher zu stellen. Ergänzend hierzu wird dann auch die Präambel 42-1 der Rückmeldung 42 in Fig. 4a genutzt. Allerdings muss diese Präambel nicht zwingend Bestandteil jeder einzelnen Rückmeldung durch den Satelliten sein. Es wäre durchaus auch denkbar, die Präambel nur in regelmäßigen Zeitabschnitten den Rückmeldungen anzufügen.

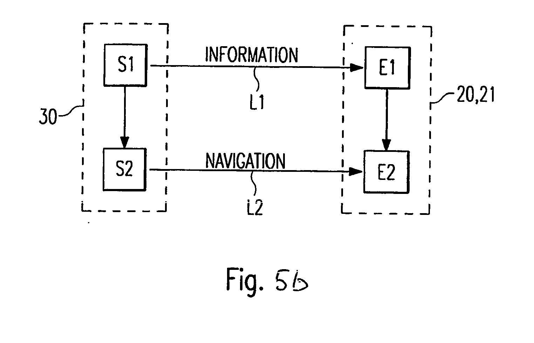

Die zuvor erläuterte Vorgehensweise zum optimierten Datenempfang durch die Kommunikationsgeräte ist ferner nochmals in Fig. 5b verdeutlicht. Dargestellt ist schematisch ein erster Sender S1, bei dem es sich beispielsweise um den Sender des Satelliten 30 für die Nachrichten- bzw. Informationsübermittlung handeln kann. Die von diesem ersten Sender E1 übermittelten Daten sollen von den ersten Empfangsmitteln E1 des Kommunikationsgeräts 20, 21 empfangen werden. Grundsätzlich wäre eine Übermittlung der Daten über diesen ersten Datenlink L1 sowie die Auswertung an Daten an den Empfangsmitteln E1 aufgrund der Präambeln bereits möglich, da diese Präambeln ein Synchronisieren der ersten Empfangsmittel E1 auf den ersten Sender S1 ermöglichen.

Gemäß dem besonderen Verfahren werden dem Kommunikationsgerät 20, 21 allerdings über einen zweiten Datenlink L2 getrennt - und beispielsweise in einem anderen Frequenzbereich - von den über den ersten Link L1 übermittelten Daten Hilfsinformationen zur Verfügung gestellt. Diese Hilfsinformationen werden von einem zweiten Sender S2 des Satelliten - insbesondere dem Sender zum Übermitteln der Navigationsinformationen - übermittelt und von zweiten Empfangsmitteln E2 des Kommunikationsgeräts 20, 21 empfangen. Diese Hilfsinformationen erlauben einen Rückschluß auf das Sendeverhalten des ersten Senders S1, da dieser sein Verhalten nach dem durch die Navigationseinheit des Satelliten 30 vorgegebenen Zeitschema ausrichtet. Durch die Weiterleitung der von den zweiten Empfangsmitteln E2 empfangenen Hilfsinformationen an die ersten zweiten Empfangsmittel E1 können diese wiederum ihr Empfangsverhalten auf das ihnen nunmehr bekannte Sendeverhalten des ersten Senders E1 ausrichten.

Beispielsweise kann also vorgesehen sein, dass der erste Sender S1 zu jeder vollen Sekunde Antwortsignale an die verschiedenen Teilnehmer des Kommunikationssystems übermittelt, wobei die Zeitbasis hierfür dem Navigationssystem des Satelliten 20 entnommen wird. Da den ersten Empfangsmitteln E1 diese Informationen über das Zeitverhalten des Navigationssystems ebenfalls zur Verfügung stehen, "wissen" diese also, zu welchen Zeitpunkten und mit welcher Frequenz Signale eintreffen werden. Wie bereits oben erwähnt wurde, kann auf diese Weise eine nahezu perfekte Synchronisation zwischen dem ersten Sender S 1 und den Empfangsmitteln E1 erzielt werden, wobei allenfalls Abweichungen im Bereich von Nanosekunden auftreten. Der Empfang der Datensignale auf dem ersten Link 1 wird hierdurch deutlich optimiert.

Anzumerken ist, dass es besonders vorteilhaft ist, wenn sowohl die Sender S1, S2 als auch die Empfangsmittel E1, E2 Bestandteil jeweils eines einzigen Geräts sind. Im dargestellten Ausführungsbeispiel des Notrufsystems ist dies ohnehin der Fall, da die Kommunikationsgeräte zusätzlich auch einen Navigationsempfänger aufweisen. Auch die vollkommen getrennte Übermittlung der Hilfsinformationen wäre allerdings denkbar.

Insgesamt wird somit durch die angegebenen Maßnahmen sichergestellt, dass eine fehlerfreie Datenübertragung zwischen dem Kommunikationsgerät der Endteilnehmer und dem Satelliten in beiden Richtungen erfolgen kann. Hierfür sind einerseits das abgestimmte zeitliche Sendeverhalten der Teilnehmer sowie das abgestimmte Empfangsverhalten der Teilnehmer auf Basis der ergänzend zur Verfügung stehenden Informationen hinsichtlich des Sendeverhaltens des bzw. der Satelliten verantwortlich, wobei diese Maßnahmen auch unabhängig von der Art der zu übermittelnden Informationen eingesetzt werden können.

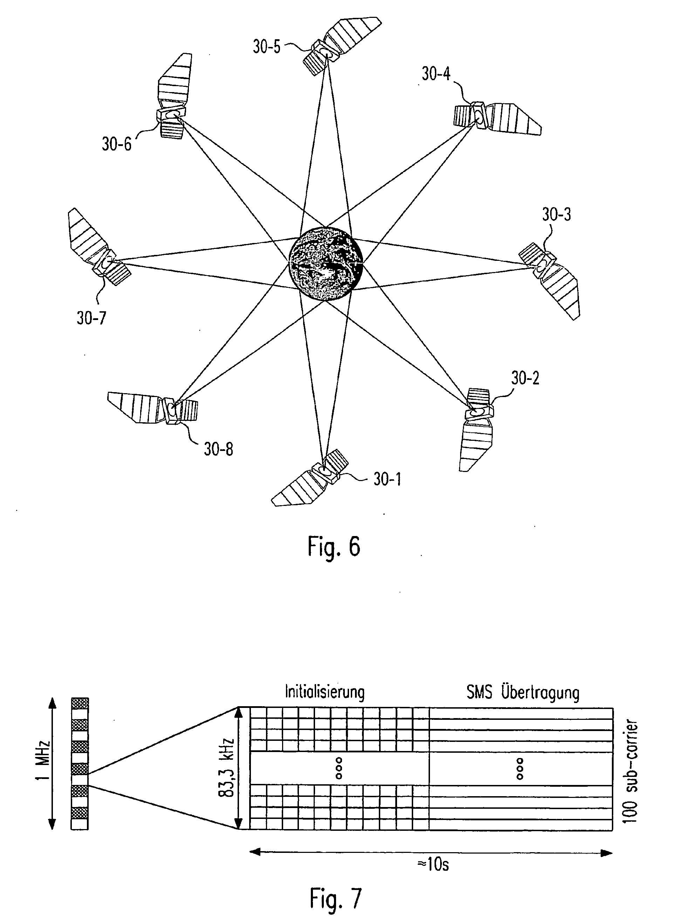

Die bisherigen Betrachtungen haben sich auf die Kommunikation zwischen einem Teilnehmer und einem einzelnen Satelliten beschränkt. Tatsächlich wird ein auf Basis der vorliegenden Erfindung gebildetes Notruf-/Warnsystem allerdings mehrere Satelliten aufweisen, um eine globale Datenübertragung sicherzustellen. In diesem Fall müssen die Satelliten allerdings unterschiedliche Frequenzen benutzen, um eine Überlappung im Datenverkehr zu vermeiden. Das eingangs genannte Frequenzband für den Reverse-Uplink II_{U} muss also in für die Satelliten jeweils einzeln nutzbare Frequenzbänder unterteilt werden. Entsprechend der Darstellung in Fig. 6 ist allerdings nicht erforderlich, dass jeder Satellit genau ein einziges Frequenzband erhält. Aufgrund der Abschattung durch die Erde besteht vielmehr die Möglichkeit, dass zwei in Opposition zueinander angeordnete Satelliten (bspw. die Satelliten 30-3 und 30-7) gemeinsame Frequenzbereiche nutzen. Bei einer Verwendung von bspw. 24 Satelliten ist somit das gesamte Frequenzband mit einer Breite von 1 MHz in insgesamt 12 Bereiche mit einer Breite von jeweils 83,3 kHz zu unterteilen.

Jedem Satelliten steht somit ein entsprechendes Frequenzband zur Verfügung, welches in vorteilhafter Weise entsprechend der Darstellung in Fig. 7 nochmals in 100 Unterbereiche (sog. sub-carrier) unterteilt wird. Innerhalb eines jeden sub-carriers mit einer Breite von 833 Hz können dann Informationen von den Endteilnehmern an den Satelliten übermittelt werden. Geht man davon aus, dass die Zeiträume T_{A} für die Initialisierung (zusammengesetzt aus 11 Zeitschlitzen Tₐ für den Empfang jeweils einer Anfrage) und T_{E} für den Empfang der eigentlichen SMS-Nachricht gemeinsam in etwa 10 s in Anspruch nehmen, bedeutet dies, dass ein einzelner Satellit in der Lage ist, in etwa 10 Textnachrichten pro Sekunde zu empfangen. Dies ist für die Bearbeitung der voraussichtlich auftretenden Notrufe entsprechend der oben angestellten Berechnung bei weitem ausreichend. Das erfindungsgemäße System ist somit tatsächlich in der Lage, global den Service eines Notrufsystems anzubieten.

Anzumerken ist, dass der jeweils für den Empfang einer Textnachricht vorgesehene sub-carrier die Empfangsfrequenz vorgibt, die im Rahmen der ersten Bestätigungsnachricht an den Endteilnehmer übermittelt wird. Da durch den Satelliten bzw. die Bodenstation dieser sub-carrier danach ausgewählt wird, in welcher Weise ein optimale Nutzung der zur Verfügung stehenden Frequenzen erfolgt, ist somit die eingangs beschriebene Anpassung der Sendefrequenz durch die Teilnehmer Voraussetzung für eine zuverlässige Datenübermittlung. Während der Anfrage hingegen können die Teilnehmer in beliebiger Weise eine Frequenz eines entsprechenden sub-carriers auswählen, da für die Anfragen diese Frequenzen nicht fest vergeben werden. Die Auswahl erfolgt in diesem Fall möglichst nach dem Zufallsprinzip, um möglichst eine gleichmäßige Ausnutzung der sub-carrier zu ermöglichen und damit Kollisionen möglichst zu vermeiden.

Die bisherigen Erläuterung bezogen sich auf die Vorgehensweise sowie die verschiedenen Maßnahmen zur sicheren Übermittlung der verschiedenen Informationen im Rahmen eines von einem Teilnehmer individuell abgesetzten Notrufs. Eine zweite Funktion des in Fig. 1 dargestellten erfindungsgemäßen Notruf-/Warnsystems besteht ferner darin, Teilnehmer des Systems vor bevorstehenden Gefahren zu warnen. Beispielsweise sollten betroffene Personen vor bevorstehenden Erdbeben oder Flutwellen gewarnt werden. Auch Unwetterwarnungen für betroffene Gebiete wären ein denkbarer Anwendungsfall für ein derartiges Warnsystem.

Im Unterschied zu der Datenübermittlung im Rahmen eines Notrufs besteht hier nicht die Aufgabe, einen Teilnehmer individuell anzusprechen, sondern möglichst alle Teilnehmer gleichzeitig zu warnen, die von einer bevorstehenden Gefahr betroffen sind. Es müssen also innerhalb eines möglichst kurzen Zeitraums möglichst viele Endgeräte angesprochen werden, wobei letztendlich die Warninformation allerdings nur an solche Benutzer weitergeleitet werden sollte, die von dem bevorstehenden Ereignis möglicherweise betroffen sind.

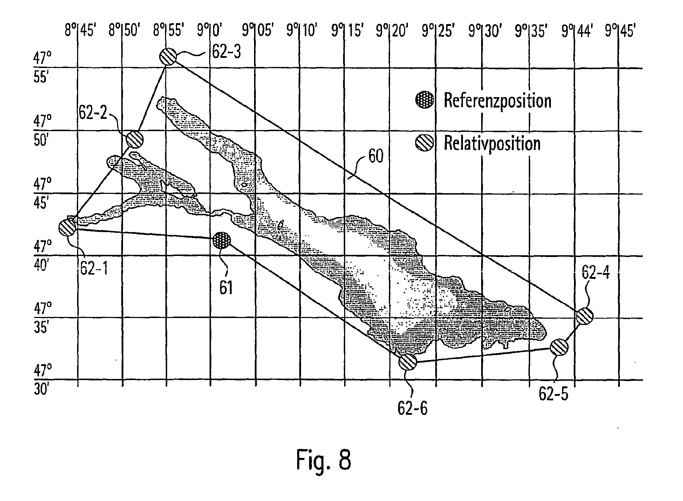

Ein erster Aspekt dieser Warnfunktion des erfindungsgemäßen Systems 1 besteht dementsprechend darin, gemeinsam mit der Übermittlung der Textmeldung, die über das bevorstehende Ereignis informiert, auch festzulegen, für welches geographische Gebiet die Information relevant ist. Vorzugsweise wird entsprechend der Darstellung in Fig. 8 die örtliche Relevanz für die Meldung bzw. das betroffene geographische Gebiet durch mehrere Einzelorte oder Positionen definiert, welche gemeinsam das betroffene Gebiet eingrenzen. Entsprechend der Darstellung in Fig. 8 werden dementsprechend sieben verschiedene Punkte gewählt, die im dargestellten Fall ein Seengebiet 60 einschließen, welches von einer Sturmwarnung, die eigentlicher Gegenstand der Wammeldung ist, betroffen ist.

Die Eingrenzung des betroffenen Gebiets 60 hängt davon ab, wie viel Orte, welche das Gebiet 60 umschließen sollen, zur Verfügung stehen. Selbstverständlich führt eine größere Anzahl von Orten zu einer erhöhten Datenmenge, weshalb in diesem Fall ein Kompromiss gefunden werden muss, um das tatsächliche Gebiet in einem möglichst komprimierten Datenpaket zu definieren.

Entsprechend einer besonders vorteilhaften Weiterbildung ist dementsprechend vorgesehen, das Gebiet 60 einerseits durch eine Referenzposition 61 zu definieren, deren Ort sehr genau angegeben wird, und andererseits die weiteren Punkte als Relativpositionen 62-1 bis 62-6 anzugeben, deren Position relativ zu der Referenzposition angegeben wird. Im dargestellten Beispiel könnte bspw. vorgesehen sein, die Referenzposition 61 mit Hilfe von insgesamt 50 Bit anzugeben, wobei dann für die Länge und Breite der Referenzposition 61 jeweils 25 Bits genutzt werden können, was letztendlich eine Positionsangabe mit einer Genauigkeit von 1,2 Metern ermöglicht. Die Relativpositionen hingegen könnten mit einer Genauigkeit von 32 Bit (16 Bit für die Länge und 16 Bit für die Breite) angegeben werden, wobei jeweils eine Schrittweite von 91 Metern gewählt wird. Dies hat zur Folge, dass insgesamt ein Gebiet mit einer Länge und Breite von jeweils 6.000 km definiert werden kann, was für sämtliche denkbaren Szenarien ausreichend ist.

Wiederum ist anzumerken, dass die verschiedenen Wertebereiche für die Angabe der einzelnen Positionen auch unterschiedlich gewählt sein könnten, um das betroffene Gebiet 60 festzulegen. Bspw. wäre es auch denkbar, die Genauigkeit von der maximalen Größe des Gebiets abhängig zu machen.

Für die Warnnachricht kann dann ein Datenformat gewählt werden, wie es bspw. in Fig. 4b dargestellt ist. Das gesamte Datenpaket 43 besteht aus vier verschiedenen Blöcken, wobei ein erster Block (bspw. mit einer Länge von 1.600 Bit) als sog. Koordinierungsanteil bzw. Präambel genutzt wird, der dazu dient, ein Synchronisieren der Empfangsgeräte auf das Satellitensignal zu ermöglichen. Bemerkenswert ist, dass die Präambel im dargestellten Ausführungsbeispiel sehr lang ist, was entsprechend den späteren Ausführungen dazu genutzt wird, einen Empfang der Satellitensignale in auch geschlossenen Räumen bzw. Gebäuden zu ermöglichen.

Die beiden weiteren Blöcke 43-2 und 43-3 dienen dazu, die örtliche Relevanz der in dem nachfolgenden Block 43-4, dem sog. Informationsanteil enthaltenen Nachricht festzulegen, wobei der Block 43-2 zur Angabe der zuvor erläuterten Referenzposition 61 dient, während hingegen der Block 43-3 die Relativpositionen 62-1 bis 62-6 angibt.

Eine Besonderheit des in Fig. 4b dargestellten Datenformats für die Warnnachricht besteht wie bereits erwähnt darin, dass eine sehr lange Präambel 43-1 gewählt wird. Die Ursache hierfür besteht darin, dass im Rahmen der Warnfunktion des erfindungsgemäßen Kommunikationssystems 1 die Warnnachricht nicht nur an sich im Freien befindende Empfänger übermittelt werden soll, sondern insbesondere auch Geräte angesprochen werden sollen, welche sich innerhalb von geschlossenen Gebäuden befinden und stationär genutzt werden. Wie allerdings der Darstellung in Fig. 1 entnommen werden kann, ist für derartige Geräte 22 in der Regel ein direkter Empfang des Satellitensignals nicht möglich. Stattdessen werden lediglich Signalanteile empfangen, die an in der Umgebung befindlichen Objekten, bspw. Bäumen 24 reflektiert werden. Das hierbei an dem Gerät 22 letztendlich eintreffende Signal ist demzufolge deutlich geschwächt.

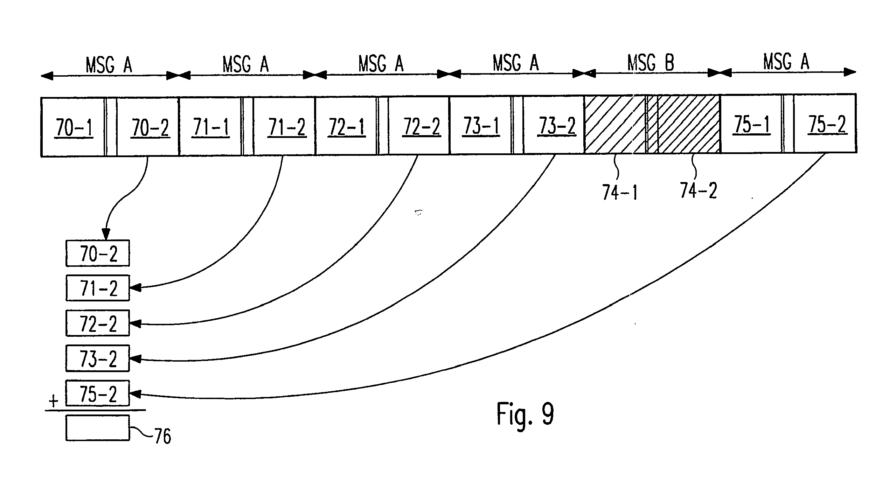

Durch die besonders bzw. überproportional lange Präambel der Wamnachricht wird nunmehr zunächst sichergestellt, dass auch bei einem sehr schwachen am Empfänger 22 eintreffenden Signal ein Synchronisieren des Empfängers auf das Satellitensignal ermöglicht wird. Diese Maßnahme allein würde allerdings noch nicht zu einem geeigneten Empfang der eigentlichen Warninformation ausreichen, da der Informationsanteil des Signals letztendlich zu rauschbehaftet ist, um die Informationen zweifelsfrei auswerten und nutzen zu können. Im Rahmen einer vorteilhaften Weiterbildung des erfindungsgemäßen Systems wird dementsprechend ein besonderes Verfahren zur Datenübermittlung eingesetzt, welches schematisch in Fig. 9 dargestellt ist.

Der Grundgedanke dieses besonderen Übertragungsverfahrens, welches auch unabhängig von den zuvor beschriebenen Weiterbildungen das Systems genutzt werden könnte, besteht darin, dass die Warnnachrichten öfters übermittelt werden und von den Empfängern solange phasenrichtig aufsummiert werden, bis das hierbei entstehende Summensignal eine fehlerfreie Auswertung der Informationen ermöglicht. Beispielsweise wird entsprechend dem dargestellten Beispiel eine bestimmte Warninformation MSG A fünfmal gesendet, wobei die entsprechenden Informationsanteile 70-2 bis 73-2 und 75-2 von den Empfangsmitteln des Kommunikationsgeräts zu dem Summensignal 76 aufsummiert werden. Wichtig hierbei ist, dass das Aufsummieren der Informationsanteile phasenrichtig erfolgt, wozu die jeweils zuvor erfolgende Übermittlung der Präambeln bzw. der Koordinierungsanteile 70-1 bis 73-1 und 75-1 genutzt wird. Erst durch das zuvor erfolgte genaue Synchronisieren des Empfängers auf das Satellitensignal unter Verwendung der Präambeln ist ein phasenrichtiges Summieren der Informationsanteile möglich, so dass die gewünschte Verstärkung des Summensignals 76 erzielt wird.

Eine weitere Besonderheit des Verfahrens besteht auch darin, dass es nicht zwingend erforderlich ist, dass die entsprechende Nachricht periodisch wiederholt wird. Stattdessen kann - wie in Fig. 9 dargestellt - zwischenzeitlich auch eine andere Nachricht MSG B übermittelt werden, die Informationen zu einem anderen Ereignis enthält und ggf. für Teilnehmer des Kommunikationssystems 1 in einem anderen geographischen Bereich bestimmt ist. Um sicherzustellen, dass der Informationsanteil 74-2 nicht versehentlich zu den Informationsanteilen der ersten Nachricht MSG A summiert wird, muss somit sichergestellt sein, dass der Empfänger Kenntnis davon erlangt, welche Nachricht gerade übermittelt wird. Hierzu kann wiederum der dem Informationsanteil mit der Nachricht vorangestellte Koordinierungsanteil bzw. die Präambel genutzt werden. Die Präambel enthält hierbei zusätzlich noch Informationen, über welche die Nachricht identifiziert werden kann. Diese Informationen geben zwar keine Auskunft über den Inhalt der Nachricht, erlauben allerdings eine Identifikation derselben, so dass sichergestellt ist, dass lediglich diejenigen Informationsanteile summiert werden, die einer gemeinsamen Nachricht zugeordnet sind. Letztendlich erfüllt somit die Präambel neben der für das Synchronisieren der Empfänger erforderlichen Phasenschätzung auch die Aufgabe, die Nachrichten zu kennzeichnen, um im Sinne des erfindungsgemäßen Verfahrens die Bildung eines eindeutigen Summensignals zu ermöglichen.

Die auf diese Weise erzielte phasenrichtige Verstärkung der Informationsanteile führt letztendlich dazu, dass das gebildete Summensignal 76 eindeutig ausgewertet werden kann, um die Nachricht weiterzuverarbeiten. Auf diese Weise ist also auch sichergestellt, dass selbst innerhalb von Gebäuden befindliche Empfänger das Satellitensignal nach einer mehrmaligen Wiederholung der Übermittlung der Nachricht verwerten können. Hierdurch wird der gewünschte Effekt angestrebt, dass eine Warninformation gleichzeitig möglichst vielen bzw. genau den betroffenen Personen übermittelt werden kann.

Anzumerken ist, dass das soeben geschilderte Verfahren nicht auf den Empfang von Satellitensignalen beschränkt ist, sondern grundsätzlich dann zum Einsatz kommen kann, wenn Textinformationen mittels einem verhältnismäßig schwach an einem Empfänger eintreffenden Signal übermittelt werden sollen. Auch bei anderweitigen Übertragungsverfahren kann dann durch eine phasenrichtige Addition der mehrmals übermittelten Informationsanteile eine geeignete Verstärkung des Signals erzielt werden, bis eine Auswertung desselben möglich ist.

Durch die zweite Funktion des erfindungsgemäßen Notruf-/Warnsystems kann also gleichzeitig eine Vielzahl von betroffenen Teilnehmern mit Warnnachrichten versorgt werden. Durch die Hinzufügung von Informationen hinsichtlich der örtlichen Relevanz der Warninformationen ist ferner sichergestellt, dass die Teilnehmer auch feststellen können, ob sie von dieser Nachricht betroffen sind oder nicht. Gemäß einem besonders bevorzugten Ausführungsbeispiel ist sogar vorgesehen, dass in den Empfangsgeräten vorgesehene Auswertemittel die Informationen hinsichtlich der örtlichen Relevanz selbständig auswerten und anhand von ergänzenden Informationen überprüfen, ob die Nachricht für den Empfänger aufgrund dessen aktueller Position gerade relevant ist oder nicht. Erst nach Überprüfung dieser Relevanz entscheidet dann das Gerät selbst, ob es die Nachrichten mittels geeigneter Verarbeitungs- bzw. Wiedergabemittel weiterverarbeitet und bspw. optisch oder akustisch wiedergibt oder nicht. Es besteht somit nicht das Problem, dass ein Benutzer des Gerätes eine Vielzahl von Warninformationen erhält und dann jedes Mal selbstständig feststellen muss, ob die Nachricht für ihn von Bedeutung ist oder nicht.

Diese vorteilhafte Vorfilterung bzw. automatische Bewertung der örtlichen Relevanz von Nachrichten kann insbesondere unter Heranziehung von Navigationsinformationen erfolgen, welche dem Empfänger bspw. wiederum über den Satelliten zur Verfügung gestellt werden. Allerdings wäre es auch denkbar, die aktuelle Position des Empfängers anderweitig zu bestimmen ohne auf den Empfang zusätzlicher Navigationssignale angewiesen zu sein. Wird bspw. als Empfangsgerät ein Mobilfunktelefon verwendet, so könnte die grobe Positionsbestimmung für den Empfänger auch über die Zellen-ID des Telefonnetzes erfolgen. Auch die manuelle Eingabe der aktuellen Position durch den Benutzer und das Abspeichern dieser Informationen in einem entsprechenden Speicher des Empfangsgerätes wäre denkbar.

Anzumerken ist, dass der soeben beschriebene Gedanke der Vorfilterung bzw. der automatischen Bewertung der örtlichen Relevanz von Nachrichten auch eigenständig eingesetzt werden könnte und in diesem Fall nicht auf die Übertragung mittels Satelliten beschränkt ist. Auch bei der Nachrichtenübermittlung mittel terrestrischer Sender für den Radio- oder Fernsehbetrieb wäre eine entsprechende Kodierung denkbar. Ferner könnte das erfindungsgemäße Verfahren auch bei der Nachrichtenübermittlung per Telefon oder Mobilfunk eingesetzt werden. Grundsätzlich würde sich hier der Vorteil ergeben, dass lediglich diejenigen Personen die Nachricht erhalten, für welche diese auch tatsächlich relevant ist.

Neben der Angabe der örtlichen Relevanz der Warninformationen könnte eine weitere Präzisierung im Hinblick auf den Nutzer des Systems bzw. die Anordnung des Empfangsgerätes in bestimmten Einrichtungen erfolgen. So ist bspw. die Information über eine Sturmwarnung für einen auf einem Schiff installierten Empfänger sicherlich relevant, während sie hingegen für einen sich innerhalb eines geschlossenen Gebäudes befindlichen Nutzer weniger von Interesse ist. Durch die Einfügung eines zusätzlichen Datenblocks könnten bspw. verschiedene Nutzer-Kategorien spezifiziert werden, wobei dann ergänzend auch auf Basis dieser Informationen das Gerät automatisch feststellt, ob die Informationen wiedergegeben werden sollen oder nicht. In diesem Fall könnte wiederum eine manuelle Eingabe durch den Benutzer vorgeben, welche Nachrichten von Interesse sind oder nicht. Hierdurch wird eine sehr komfortable Möglichkeit zur individuellen Warnung vor für den Benutzer eines Gerätes relevanten Gefahren ermöglicht.

Den obigen Erläuterungen der verschiedenen Funktionen des erfindungsgemäßen Systems kann entnommen werden, dass die Endgeräte, über die eine Kommunikation mit dem Satelliten bzw. der Zentrale des Notruf-/Warnsystems erfolgt, unterschiedlichst ausgestaltet sein können und auch unterschiedliche Funktionalitäten bieten können. Dabei können die Geräte in verschiedene Kategorien hinsichtlich ihrer Nutzungsmöglichkeiten unterteilt werden.

An erster Stelle stehen hierbei solche Geräte, die sowohl die Übermittlung von Textnachrichten zur Abgabe eines Notrufs als auch den Empfang von globalen Warnnachrichten ermöglichen. Üblicherweise weisen diese Geräte zusätzlich auch einen Navigationsempfänger auf, um im Rahmen der verschiedenen Übertragungsverfahren auf die benötigten Navigationsinformationen zurückgreifen zu können. Diese Geräte der ersten Kategorie können bspw. durch tragbare Kommunikationsgeräte gebildet sein. Es wäre allerdings auch denkbar, derartige Geräte in Fahrzeugen, wie Flugzeugen, Schiffen oder Kraftwagen zu installieren. Insbesondere bei der Anordnung derartiger Geräte in Fahrzeugen könnte darüber hinaus auch vorgesehen sein, dass die Abgabe eines Notrufs automatisch im Falle eines Unfalls oder dgl. initiiert wird. Selbstverständlich ist in diesem Fall die Anordnung des Kommunikationsgeräts an einer Stelle vorteilhaft, die von Unfällen möglichst wenig betroffen ist. Bei der Anordnung in einem Fahrzeug bspw. wäre die Montage innerhalb der Fahrgastzelle - insbesondere am Armaturenbrett - sinnvoll, da in diesem Bereich die größte Sicherheit vor ungewollten Beschädigungen besteht.

Eine zweite Kategorie von Geräten bilden diejenigen, die wiederum in beweglichen Objekten - wie z.B. Fahrzeugen - angeordnet oder als tragbare Kommunikationsgeräte ausgestaltet sind. Im Gegensatz zu den Geräten der zuvor geschilderten Kategorie, welche auch die Übermittlung von Textnachrichten ermöglichen und dementsprechend zur Realisierung einer fehlerfreien Datenübertragung Navigationsinformationen hinsichtlich des Teilnehmers und des Satelliten berücksichtigen müssen, sind die Geräte der zweiten Kategorie ausschließlich dazu vorgesehen, globale Warnnachrichten zu empfangen. In diesem Fall ist die Nutzung eines Navigationsempfängers nicht zwingend erforderlich, da aufgrund der zuvor beschriebenen Maßnahmen im Hinblick auf die Übermittlung der Warnnachrichten die ergänzende Nutzung von Navigationsinformationen nicht zwingend erforderlich ist. Trotz allem würde auch in diesen Fällen der Navigationsempfänger zusätzliche Vorteile mit sich bringen. Zum einen können die über ihn enthaltenen Informationen als Hilfsinformationen genutzt werden, um das Empfangsverhalten des Geräts in optimaler Weise auf das Satellitensignal abzustimmen. Darüber hinaus bietet der Navigationsempfänger auch die Möglichkeit, automatisch eine Überprüfung der Relevanz der Warninformationen im Hinblick auf eine örtliche Beschränkung zu überprüfen. Diese zweite Möglichkeit würde allerdings auch - wie bereits geschildert - durch die Nutzung anderweitiger Informationen wie z.B. die Ortsbestimmung über die Zellenidentifizierung eines Mobilfunknetzes oder durch die vorherige manuelle Eingabe durch einen Benutzer des Gerätes bestehen.

Eine dritte Kategorie möglicher Endgeräte schließlich besteht in quasi-stationären Geräten, welche insbesondere innerhalb geschlossener Gebäude angeordnet sind. Derartige Geräte können bspw. durch Elektrogeräte wie Fernseher oder Radios gebildet sein. Sie sind ausschließlich dazu ausgebildet, die globalen Warninformationen des Systems zu empfangen, wobei aufgrund der zuvor geschilderten Maßnahmen ein Empfang der Informationen trotz der Anordnung der Geräte innerhalb geschlossener Gebäude möglich ist. Die Nutzung eines zusätzlichen Navigationsempfängers ist in diesem Fall nicht sinnvoll. Um eine automatische Vorsortierung von Warninformationen im Hinblick auf die örtliche Relevanz vornehmen zu können, ist bei derartigen Geräten vorzugsweise vorgesehen, dass entsprechende Informationen durch einen Benutzer bei der Installation des Gerätes vorgenommen werden.

Insgesamt gesehen wird somit durch die vorliegende Erfindung bzw. die beschriebenen verschiedenen Maßnahmen ein satellitengestütztes Kommunikationssystem zur Verfügung gestellt, welches eine zuverlässige Übermittlung von Textinformationen in Kombination mit Ortsinformationen ermöglicht. Hierdurch besteht nunmehr die Möglichkeit, ein globales Notruf-/Warnsystem zu bilden, welches einen Datenaustausch mit der erforderlichen Zuverlässigkeit ermöglicht.

## Patentansprüche

1. Kommunikationssystem (1) mit einem Kommunikationsgerät (20, 21, 22) sowie einer durch einen Satelliten (30) gebildeten zentralen Einrichtung zum Empfangen von von dem Kommunikationsgerät (20, 21, 22) zu übermittelnden Informationen; darin gekennzeichnet, daß im Rahmen einer Initialisierungsprozedur zu dem Kommunikationsgerät (20, 21, 22) Daten hinsichtlich eines vorgegebenen Empfangszeitpunkts (t_{E}) für die Informationen durch den Satelliten übermittelt werden, und
das Kommunikationsgerät (20, 21, 22) auf Basis von Informationen hinsichtlich der Positionen des Kommunikationsgeräts (20, 21, 22) und des Satelliten (30) einen geeigneten Zeitpunkt (tₛ₂) für die Übermittlung der Informationen zu dem Satellit durch dass Kommunikationsgerät ermittelt.

2. Kommunikationssystem nach Anspruch 1,
**dadurch gekennzeichnet,**
**dass** im Rahmen der Initialisierungsprozedur das Kommunikationsgerät (20, 21, 22) eine erste Anfrage (40) an den Satelliten (30) übermittelte und der Satellit (30) in Antwort auf diese Anfrage (40) Daten hinsichtlich des dem Kommunikationsgerät (20, 21, 22) zugewiesenen Empfangszeitpunkts (t_{E}) für die zu übermittelnden Informationen übermittelt.

3. Kommunikationssystem nach Anspruch 2,
**dadurch gekennzeichnet,**
**dass** das Kommunikationsgerät (20, 21, 22) bei der Übermittlung der Anfrage (40) bereits die Informationen hinsichtlich der Positionen des Kommunikationsgeräts (20, 21, 22) und des Satelliten (30) berücksichtigt.

4. Kommunikationssystem nach Anspruch 3,
**dadurch gekennzeichnet,**
**dass** das Kommunikationsgerät (20, 21, 22) für die Übermittlung der Anfrage (40) einen Zeitpunkt (tₛ₁) derart wählt, dass die Anfrage (40) innerhalb eines vorgegebenen Zeitabschnitts (Tₐ) an dem Satelliten (30) eintrifft.

5. Kommunikationssystem nach einem der Ansprüche 2 bis 4,
**dadurch gekennzeichnet,**
**dass** das System mehrere Satelliten (30) aufweist, welche einen Datenaustausch in verschiedenen Frequenzbereichen ermöglichen, wobei das Kommunikationsgerät (20, 21, 22) die Anfrage an denjenigen Satelliten (30) übermittelt, der aufgrund seiner aktuellen Position eine bestmögliche Übertragung gewährleistet.

6. Kommunikationssystem nach einem der Ansprüche 1 bis 5,
**dadurch gekennzeichnet,**
**dass** das Kommunikationsgerät (20, 21, 22) sein Verhalten zum Empfangen der von dem Satelliten (30) übermittelten Signale auf Basis der Informationen hinsichtlich der Positionen des Kommunikationsgeräts (20, 21, 22) und des Satelliten (30) abstimmt, welche dem Kommunikationsgerät (20, 21, 22) getrennt von den Satellitensignalen übermittelt werden.

7. Kommunikationsgerät (20, 21, 22) mit Sendemitteln zur Übermittlung von Informationen an eine durch einen Satelliten (30) gebildete zentrale Einrichtung, wobei die Sendemittel dazu ausgestaltet sind, in Abhängigkeit von zuvor festgelegten Daten hinsichtlich eines vorgegebenen Empfangszeitpunkts (t_{E}) sowie auf Basis von Informationen hinsichtlich der Positionen des Kommunikationsgeräts (20, 21, 22) und des Satelliten (30) einen geeigneten Zeitpunkt (tₛ₂) für die Übermittlung der Informationen zu ermitteln.

8. Kommunikationsgerät nach Anspruch 7,
**dadurch gekennzeichnet,**
**dass** dieses einen Navigationsempfänger aufweist, wobei die über diesen Navigationsempfänger erhaltenen Daten als Informationen von den Sendemitteln bei der Ermittlung des geeigneten Zeitpunkts (tₛ₂) für die Übermittlung der Informationen berücksichtigt werden.

9. Kommunikationsgerät nach Anspruch 7 oder 8,
**dadurch gekennzeichnet,**
**dass** es sich um ein tragbares Gerät handelt.

10. Kommunikationsgerät nach Anspruch 7 oder 8,
**dadurch gekennzeichnet,**
**dass** dieses zur Anordnung in einem Fahrzeug vorgesehen ist.

11. Verfahren zum Übermitteln von Informationen von einem Kommunikationsgerät (20, 21, 22) an eine durch einen Satelliten (30) gebildete zentrale Empfangseinrichtung, darin gekennzeichnet, daß im Rahmen einer Initalisierungsprozedur ein vorgegebener Empfangszeitpunkt (t_{E}) für die Informationen zu dem Kommunikationsgerät durch den Satellit übermittelt wird, und
das Kommunikationsgerät auf Basis von Informationen hinsichtlich der Positionen des Kommunikationsgeräts (20, 21, 22) und des Satelliten (30) ein geeigneter Zeitpunkt (tₛ₂) für die Übermittlung der Informationen zu dem Satellit durch dass Kommunikationsgerät ermittelt.

12. Verfahren nach Anspruch 11,
**dadurch gekennzeichnet,**
**dass** im Rahmen der Initialisierungsprozedur eine erste Anfrage (40) an den Satelliten (30) übermittelt wird und der Satellit (30) in Antwort auf diese Anfrage (40) Daten hinsichtlich des zugewiesenen Empfangszeitpunkts (t_{E}) für die zu übermittelnden Informationen übermittelt.

13. Verfahren nach Anspruch 12,
**dadurch gekennzeichnet,**
**dass** bei der Übermittlung der Anfrage (40) bereits die Informationen hinsichtlich der Positionen des Kommunikationsgeräts (20, 21, 22) und des Satelliten (30) berücksichtigt werden.

14. Verfahren nach Anspruch 13,
**dadurch gekennzeichnet,**
**dass** für die Übermittlung der Anfrage (40) ein Zeitpunkt (tₛ₁) derart gewählt wird, dass die Anfrage (40) innerhalb eines vorgegebenen Zeitabschnitts (Tₐ) an dem Satelliten (30) eintrifft.

## Claims

1. A communication system (1) having a communication device (20, 21, 22) and also a central facility, formed by a satellite (30), for receiving information to be transmitted by the communication device (20, 21, 22),
**characterised in that**
data with regard to a predetermined reception time (t_{E}) for the information are transmitted to the communication device (20, 21, 22) by means of the satellite as part of an initialization procedure, and
the communication device (20, 21, 22) determines a suitable time (tₛ₂) for transmitting the information to the satellite by means of the communication device on the basis of information with regard to the positions of the communication device (20, 21, 22) and of the satellite (30).

2. A communication system according to claim 1,
**characterised in that**
the communication device (20, 21, 22) transmits a first inquiry (40) to the satellite (30) as part of the initialization procedure, and the satellite (30), in response to this inquiry (40), transmits data with regard to the reception time (t_{E}) assigned to the communication device (20, 21, 22) for the information to be transmitted.

3. A communication system according to claim 2,
**characterised in that**
the communication device (20, 21, 22) already takes into consideration the information with regard to the positions of the communication device (20, 21, 22) and of the satellite (30) in the transmission of the inquiry (40).

4. A communication system according to claim 3,
**characterised in that**
the communication device (20, 21, 22) selects a time (tₛ₁) for transmitting the inquiry (40) in such a manner that the inquiry (40) arrives at the satellite (30) within a predetermined time interval (Tₐ).

5. A communication system according to one of claims 2 to 4,
**characterised in that**
the system has a number of satellites (30) which enable data to be exchanged in different frequency bands, wherein the communication device (20, 21, 22) transmits the inquiry to the satellite (30) that guarantees the best possible transmission by virtue of its current position.

6. A communication system according to one of claims 1 to 5,
**characterised in that**
the communication device (20, 21, 22) matches its behaviour for receiving the signals transmitted by the satellite (30) on the basis of the information with regard to the positions of the communication device (20, 21, 22) and of the satellite (30) that is transmitted to the communication device (20, 21, 22) separately from the satellite signals.

7. A communication device (20, 21, 22) having transmitting means for transmitting information to a central facility formed by a satellite (30),
wherein the transmitting means are configured for determining a suitable time (tₛ₂) for transmitting the information in dependence on previously established data with regard to a predetermined reception time (t_{E}) and on the basis of information with regard to the positions of the communication device (20, 21, 22) and of the satellite (30).

8. A communication device according to claim 7,
**characterised in that**
it has a navigation receiver, wherein the data received via this navigation receiver are taken into consideration by the transmitting means as information during the determination of the suitable time (tₛ₂) for transmitting the information.

9. A communication device according to claim 7 or 8,
**characterised in that**
it is a portable device.

10. A communication device according to claim 7 or 8,
**characterised in that**
it is provided for arrangement in a vehicle.

11. A method for transmitting information from a communication device (20, 21, 22) to a central receiving facility formed by a satellite (30),
**characterised in that**
a predetermined reception time (t_{E}) for the information is transmitted to the communication device by means of the satellite as part of an initialization procedure, and
the communication device determines a suitable time (tₛ₂) for transmitting the information to the satellite by means of the communication device on the basis of information with regard to the positions of the communication device (20, 21, 22) and of the satellite (30).

12. A method according to claim 11,
**characterised in that**
a first inquiry (40) is transmitted to the satellite (30) as part of the initialization procedure, and the satellite (30), in response to this inquiry (40), transmits data with regard to the assigned reception time (t_{E}) for the information to be transmitted.

13. A method according to claim 12,
**characterised in that**
the information with regard to the positions of the communication device (20, 21, 22) and of the satellite (30) are already taken into consideration during the transmission of the inquiry (40).

14. A method according to claim 13,
**characterised in that**
for transmitting the inquiry (40), a time (tₛ₁) is selected in such a manner that the inquiry (40) arrives at the satellite (30) within a predetermined time interval (Tₐ).

## Revendications

1. Système de communication (1) pourvu d'un appareil de communication (20, 21, 22) ainsi que d'une installation centrale formée par un satellite (30) et destinée à recevoir des informations à transmettre par l'appareil de communication (20, 21, 22),
**caractérisé en ce que**, dans le cadre d'une procédure d'initialisation, des données concernant un instant de réception prédéfini (t_{E}) pour les informations sont transmises à l'appareil de communication (20, 21, 22) par le satellite, et
**en ce que** l'appareil de communication (20, 21, 22) détermine sur la base d'informations concernant les positions de l'appareil de communication (20, 21, 22) et du satellite (30) un instant approprié (tₛ₂) pour la transmission des informations au satellite par l'appareil de communication.

2. Système de communication selon la revendication 1, **caractérisé en ce que**, dans le cadre de la procédure d'initialisation, l'appareil de communication (20, 21, 22) transmet une première demande (40) au satellite (30) et le satellite (30) en réponse à cette demande (40) transmet des données concernant l'instant de réception (t_{E}) assigné à l'appareil de communication (20, 21, 22) pour la transmission des informations.

3. Système de communication selon la revendication 2, **caractérisé en ce que**, lors de la transmission de la demande (40), l'appareil de communication (20, 21, 22) tient déjà compte des informations concernant les positions de l'appareil de communication (20, 21, 22) et du satellite (30).

4. Système de communication selon la revendication 3, **caractérisé en ce que** l'appareil de communication (20, 21, 22) choisit pour la transmission de la demande (40) un instant (tₛ₁) de manière telle que la demande (40) arrive au satellite (30) au cours d'un intervalle de temps prédéfini (Tₐ).

5. Système de communication selon l'une quelconque des revendications 2 à 4, **caractérisé en ce que** le système comporte plusieurs satellites (30) qui permettent un échange de données dans différentes gammes de fréquences, l'appareil de communication (20, 21, 22) transmettant la demande au satellite (30) qui garantit la meilleure transmission possible en raison de sa position actuelle.

6. Système de communication selon l'une quelconque des revendications 1 à 5, **caractérisé en ce que** l'appareil de communication (20, 21, 22) détermine son comportement pour la réception des signaux transmis par le satellite (30) sur la base des informations concernant les positions de l'appareil de communication (20, 21, 22) et du satellite (30), qui sont transmises à l'appareil de communication (20, 21, 22) séparément des signaux de satellite.

7. Appareil de communication (20, 21, 22) pourvu de moyens d'émission destinés à la transmission d'informations à une installation centrale formée par un satellite (30), les moyens d'émission étant conçus pour déterminer, en fonction de données définies au préalable concernant un instant de réception prédéfini (t_{E}) ainsi que sur la base des informations concernant les positions de l'appareil de communication (20, 21, 22) et du satellite (30), un instant approprié (tₛ₂) pour la transmission des informations.

8. Appareil de communication selon la revendication 7, **caractérisé en ce qu'**il comporte un récepteur de navigation, les données reçues par le biais de ce récepteur de navigation en tant qu'informations étant prises en compte par les moyens d'émissions lors de la détermination de l'instant approprié (tₛ₂) pour la transmission des informations.

9. Appareil de communication selon la revendication 7 ou 8, **caractérisé en ce qu'**il s'agit d'un appareil portable.

10. Appareil de communication selon la revendication 7 ou 8, **caractérisé en ce que** celui-ci est prévu pour l'agencement dans un véhicule.

11. Procédé de transmission d'informations d'un appareil de communication (20, 21, 22) à une installation centrale formée par un satellite (30), **caractérisé**
**en ce que**, dans le cadre d'une procédure d'initialisation, un instant de réception prédéfini (t_{E}) pour les informations est transmis à l'appareil de communication par le satellite, et
**en ce que**, sur la base des informations concernant les positions de l'appareil de communication (20, 21, 22) et du satellite (30), l'appareil de communication détermine un instant approprié (tₛ₂) pour la transmission des informations au satellite.

12. Procédé selon la revendication 11, **caractérisé**
**en ce que**, dans le cadre de la procédure d'initialisation, une première demande (40) est transmise au satellite (30) et
**en ce que**, en réponse à cette demande (40), le satellite (30) transmet des données concernant l'instant de réception assigné (t_{E}) pour les informations à transmettre.

13. Procédé selon la revendication 12, **caractérisé en ce que**, lors de la transmission de la demande (40), les informations concernant les positions de l'appareil de communication (20, 21, 22) et du satellite (30) sont déjà prises en compte.

14. Procédé selon la revendication 13, **caractérisé en ce que**, pour la transmission de la demande (40), il est choisi un instant (tₛ₁) de manière telle que la demande (40) arrive au satellite (30) au cours d'un intervalle de temps prédéfini (Tₐ).
